# EUROPEAN PATENT APPLICATION

(11) **EP 4 518 401 A1**
(43) Date of publication of application: **05.03.2025**
(21) Application number: 23795574.5
(22) Date of filing: 27.04.2023
(51) Int. Cl.: H04W 24/02, H04W 4/12, H04W 12/10, H04L 47/34, H04L 43/08

(54) **DATA PROCESSING METHOD AND COMMUNICATION DEVICE**

(30) Priority: 29.04.2022 CN 202210476546
(71) Applicant: Vivo Mobile Communication Co., Ltd., Dongguan, Guangdong 523863 (CN)
(72) Inventor: KE, Xiaowan, Dongguan, Guangdong 523863 (CN)
(74) Representative: Cabinet Beaumont
(86) International application number: PCT/CN2023/091324
(87) International publication number: WO 2023/208142

(57) **Abstract**

Embodiments of the present invention provide a data processing method and a communication device. The method applied to a first communication device includes: executing, by the first communication device, a first operation, where the first operation includes at least one of the following: determining that a first data set is failed, or determining that the first data set is successful, or determining that the first data set is not a failed data set; determining that the first data set is completely sent or incompletely sent; determining that the first data set is completely received or incompletely received; incorporating a failure of the first data set into data set failure rate statistics; skipping incorporating the first data set into the data set failure rate statistics; and determining that the denominator of a data set failure rate does not include the first data set.

## Description

### CROSS-REFERENCE TO RELATED APPLICATIONS

This application claims the priority of Chinese Patent Application No. 202210476546.9 filed on April 29, 2022 and entitled "Data Processing Method and Communication Device", the entire content of which is hereby incorporated by reference.

### TECHNICAL FIELD

Embodiments of the present invention relate to the field of wireless communication technologies, and in particular, to a data processing method and a communication device.

### BACKGROUND

A failure rate for data packets is an index of QoS guarantee, which is generally used for identifying the failure of a single data packet. In some new scenes (for example, XR scenes), a new QoS index and a data set (for example, frame-level) failure rate require to be considered. A data set may include a plurality of data packets. The success and failure situations of the individual data packets may be different. In view of some data packets being delivered successfully and some data packets failing to be transmitted in a data set, how to determine whether the data set is failed or successful is a problem to be solved.

### SUMMARY

Embodiments of the present invention provide a data processing method and a communication device, which are intended to solve the problems of how to determine the success of data sets and/or how to determine the failure of the data sets.

According to a first aspect, there is provided a data processing method applied to a first communication device. The method includes: executing, by a first communication device, a first operation, where the first operation includes at least one of the following: determining that a first data set is failed, or determining that the first data set is successful, or determining that the first data set is not a failed data set; determining that the first data set is completely sent or incompletely sent; determining that the first data set is completely received or incompletely received; incorporating a failure of the first data set into data set failure rate statistics; skipping incorporating the first data set into the data set failure rate statistics; and determining that the denominator of a data set failure rate does not include the first data set.

According to a second aspect, there is provided a data processing method applied to a second communication device. The method includes: executing, by a second communication device, a second operation, where the second operation includes at least one of the following: determining a data set failure rate requirement; determining a first indicator; determining a second indicator; determining a fifth indicator; and sending third information, where the third information includes at least one of the following: the data set failure rate requirement, range information of data sets corresponding to the data set failure rate requirement, the first indicator, the second indicator, and the fifth indicator; the first indicator is used for indicating at least one of the following: all data packets in a first data set require to be completely processed; the second indicator is used for indicating at least one of the following: all header data packets in the first data set require to be completely processed, and information about the range of header data packets requires to be completely processed; and the fifth indicator is used for indicating at least one of the following: tail data in the first data set allows to be lost, and information about the range of tail data packets allows to be lost.

According to a third aspect, there is provided a data processing method applied to a third communication device. The method includes: executing, by a third communication device, a third operation, where the third operation includes at least one of the following: determining fourth information, where the fourth information includes at least one of the following: a third indicator, first information, a fourth indicator, and second information; and sending the fourth information, where the third indicator is used for indicating one of the following: some data packets in a first data set are lost, the first data set is lost entirely, some data packets in the first data set are lost outside a first network, some data packets in the first data set are lost outside a first communication device, the first data set is lost entirely outside the first network, and the first data set is lost entirely outside the first communication device; the first information includes at least one of the following: information of data packets in the first data set lost outside the first network, and information of data sets lost outside the first network; the fourth indicator is used for indicating one of the following: header data in the first data set is lost, header data in the first data set is lost outside the first network, and header data in the first data set is lost outside the first communication device; and the second information includes: information of header data packets in the first data set lost outside the first network.

According to a fourth aspect, there is provided a communication device, where the communication device is a first communication device. The device includes: a first execution unit, configured to execute a first operation, where the first operation includes at least one of the following: determining that a first data set is failed, or determining that the first data set is successful, or determining that the first data set is not a failed data set; determining that the first data set is completely sent or incompletely sent; determining that the first data set is completely received or incompletely received; incorporating a failure of the first data set into data set failure rate statistics; skipping incorporating the first data set into the data set failure rate statistics; and determining that the denominator of a data set failure rate does not include the first data set.

According to a fifth aspect, there is provided a communication device, where the communication device is a second communication device. The device includes: a second execution unit, configured to execute a second operation, where the second operation includes at least one of the following: determining a data set failure rate requirement; determining a first indicator; determining a second indicator; determining a fifth indicator; and sending third information, where the third information includes at least one of the following: the data set failure rate requirement, range information of data sets corresponding to the data set failure rate requirement, the first indicator, the second indicator, and the fifth indicator; and the first indicator is used for indicating at least one of the following: all data packets in a first data set require to be completely processed; the second indicator is used for indicating at least one of the following: all header data packets in the first data set require to be completely processed, and information about the range of header data packets requires to be completely processed; and the fifth indicator is used for indicating at least one of the following: tail data in the first data set allows to be lost, and information about the range of tail data packets allows to be lost.

According to a sixth aspect, there is provided a communication device, where the communication device is a third communication device. The device includes: a third execution unit, configured to execute a third operation, where the third operation includes at least one of the following: determining fourth information, where the fourth information includes at least one of the following: a third indicator, first information, a fourth indicator, and second information; and sending the fourth information, where the third indicator is used for indicating one of the following: some data packets in a first data set are lost, the first data set is lost entirely, some data packets in the first data set are lost outside a first network, some data packets in the first data set are lost outside a first communication device, the first data set is lost entirely outside the first network, and the first data set is lost entirely outside the first communication device; the first information includes at least one of the following: information of data packets in the first data set lost outside the first network, and information of data sets lost outside the first network; the fourth indicator is used for indicating one of the following: header data in the first data set is lost, header data in the first data set is lost outside the first network, and header data in the first data set is lost outside the first communication device; and the second information includes: information of header data packets in the first data set lost outside the first network.

According to a seventh aspect, there is provided a first communication device. The first communication device includes a processor and a memory. The memory stores programs or instructions executable on the processor. The programs or instructions, when executed by the processor, implement the steps of the method as described in the first aspect.

According to an eighth aspect, there is provided a first communication device, including a processor and a communication interface. The processor is configured to execute a first operation, where the first operation includes at least one of the following: determining that a first data set is failed, or determining that the first data set is successful, or determining that the first data set is not a failed data set; determining that the first data set is completely sent or incompletely sent; determining that the first data set is completely received or incompletely received; incorporating a failure of the first data set into data set failure rate statistics; skipping incorporating the first data set into the data set failure rate statistics; and determining that the denominator of a data set failure rate does not include the first data set.

According to a ninth aspect, there is provided a second communication device. The second communication device includes a processor and a memory. The memory stores programs or instructions executable on the processor. The programs or instructions, when executed by the processor, implement the steps of the method as described in the second aspect.

According to a tenth aspect, there is provided a second communication device, including a processor and a communication interface. The processor is configured to execute a second operation, where the second operation includes at least one of the following: determining a data set failure rate requirement; determining a first indicator; determining a second indicator; determining a fifth indicator; and sending third information, where the third information includes at least one of the following: the data set failure rate requirement, range information of data sets corresponding to the data set failure rate requirement, the first indicator, the second indicator, and the fifth indicator; and the first indicator is used for indicating at least one of the following: all data packets in a first data set require to be completely processed; the second indicator is used for indicating at least one of the following: all header data packets in the first data set require to be completely processed, and information about the range of header data packets requires to be completely processed; and the fifth indicator is used for indicating at least one of the following: tail data in the first data set allows to be lost, and information about the range of tail data packets allows to be lost.

According to an eleventh aspect, there is provided a third communication device. The third communication device includes a processor and a memory. The memory stores programs or instructions executable on the processor. The programs or instructions, when executed by the processor, implement the steps of the method as described in the third aspect.

According to a twelfth aspect, there is provided a third communication device, including a processor and a communication interface. The processor is configured to execute a third operation, where the third operation includes at least one of the following: determining fourth information, where the fourth information includes at least one of the following: a third indicator, first information, a fourth indicator, and second information; and sending the fourth information, where the third indicator is used for indicating one of the following: some data packets in a first data set are lost, the first data set is lost entirely, some data packets in the first data set are lost outside a first network, some data packets in the first data set are lost outside a first communication device, the first data set is lost entirely outside the first network, and the first data set is lost entirely outside the first communication device; the first information includes at least one of the following: information of data packets in the first data set lost outside the first network, and information of data sets lost outside the first network; the fourth indicator is used for indicating one of the following: header data in the first data set is lost, header data in the first data set is lost outside the first network, and header data in the first data set is lost outside the first communication device; and the second information includes: information of header data packets in the first data set lost outside the first network.

According to a thirteenth aspect, there is provided a communications system, including: a first communication device, a second communication device and a third communication device, where the first communication device may be configured to execute the steps of the data processing method as described in the first aspect, the second communication device may be configured to execute the steps of the data processing method as described in the second aspect, and the third communication device may be configured to execute the steps of the data processing method as described in the third aspect.

According to a fourteenth aspect, there is provided a readable storage medium. The readable storage medium has programs or instructions stored thereon. The programs or instructions, when executed by a processor, implement the steps of the data processing method as described in the first aspect, or implement the steps of the data processing method as described in the second aspect, or implement the steps of the data processing method as described in the third aspect.

According to a fifteenth aspect, there is provided a chip. The chip includes a processor and a communication interface. The communication interface is coupled to the processor. The processor is configured to execute programs or instructions to implement the data processing method as described in the first aspect, or implement the data processing method as described in the second aspect, or implement the data processing method as described in the third aspect.

According to a sixteenth aspect, there is provided a computer program/program product. The computer program/program product is stored in a storage medium. The computer program/program product, when executed by at least one processor, implements the steps of the data processing method as described in the first aspect, or implements the steps of the data processing method as described in the second aspect, or implements the steps of the data processing method as described in the third aspect.

In this embodiment of the present invention, a first communication device executes a first operation, where the first operation includes at least one of the following: determining that a first data set is failed, or determining that the first data set is successful, or determining that the first data set is not a failed data set; determining that the first data set is completely sent or incompletely sent; determining that the first data set is completely received or incompletely received; incorporating a failure of the first data set into data set failure rate statistics; skipping incorporating the first data set into the data set failure rate statistics; and determining that the denominator of a data set failure rate does not include the first data set. Therefore, the first communication device considers the transmission situation of various data sets, realizes the determination of the success of the data sets and/or how to determine the failure of the data sets, and thus can realize accurate statistics of a data set failure rate.

### BRIEF DESCRIPTION OF THE DRAWINGS

Various other advantages and benefits become clear to a person of ordinary skill in the art by reading the following detailed description of exemplary implementations. The accompanying drawings are merely used for illustrating the preferred implementations and are not intended to constitute a limitation on the present invention. Throughout the accompanying drawings, the same reference numerals are used to represent the same components. In the accompanying drawings:
FIG. 1 is a schematic architectural diagram of a wireless communication system according to embodiments of the present invention;
FIG. 2 is a first schematic flowchart of a data processing method according to embodiments of the present invention;
FIG. 3 is a second schematic flowchart of a data processing method according to embodiments of the present invention;
FIG. 4 is a third schematic flowchart of a data processing method according to embodiments of the present invention;
FIG. 5 is a first schematic interactive diagram of a data processing method according to embodiments of the present invention;
FIG. 6 is a second schematic interactive diagram of a data processing method according to embodiments of the present invention;
FIG. 7 is a first schematic structural diagram of a communication device according to embodiments of the present invention;
FIG. 8 is a second schematic structural diagram of a communication device according to embodiments of the present invention;
FIG. 9 is a third schematic structural diagram of a communication device according to embodiments of the present invention;
FIG. 10 is a schematic structural diagram of a communication device according to embodiments of the present invention;
FIG. 11 is a schematic diagram of a hardware structure of a terminal implementing embodiments of this application;
FIG. 12 is a first schematic diagram of a hardware structure of a network side device implementing embodiments of this application; and
FIG. 13 is a second schematic diagram of a hardware structure of a network side device implementing embodiments of this application.

### DETAILED DESCRIPTION

The following clearly and completely describes the technical solutions in embodiments of the present invention with reference to the accompanying drawings in embodiments of the present invention. Apparently, the described embodiments are some of embodiments of the present invention rather than all of the embodiments. All other embodiments obtained by a person of ordinary skill in the art based on embodiments of the present invention without creative efforts shall fall within the protection scope of the present invention.

In the specification and claims of this application, the terms "comprise" and any variants thereof are intended to cover a non-exclusive inclusion. For example, a process, method, system, product, or device that includes a series of steps or units is not necessarily limited to those steps or units that are clearly listed, but may include other steps or units not clearly listed or inherent to such a process, method, product, or device.

The terms "first" and "second" in the specification and claims of this application are used to distinguish similar objects, but are unnecessarily used to describe a specific sequence or order. It will be appreciated that the terms used in this way are exchangeable in a proper case, so that embodiments of this application can be implemented in an order different from the order shown or described herein, and objects distinguished by "first" and "second" are usually of the same category and the number of the objects is not defined. For example, there may be one or more first objects.

Furthermore, the term "and/or" used in the specification and claims represent at least one of the connected objects. For example, A and/or B may represent the following three cases: Only A exists, only B exists, and both A and B exist. The character "/" usually represents that previous and next associated objects form an "or" relationship.

In embodiments of the present invention, the word such as "exemplarily" or "for example" is used to mean serving as an example, an illustration, or a description. Any embodiment or design scheme described as "exemplarily" or "for example" in embodiments of the present invention should not be construed as being preferred or superior to other embodiments or design schemes. To be specific, the use of the word such as "exemplarily" or "for example" is intended to present the related concepts in a specific manner.

The technologies described in this specification are not limited to the fifth-generation mobile communication (5th-generation, 5G) system and an evolution-advanced communication system, is not limited to the LTE/LTE-advanced (LTE-Advanced, LTE-A) system, and may further be applied to various wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems.

The terms "system" and "network" may usually be used interchangeably. A CDMA system may implement radio technologies such as CDMA2000 and universal terrestrial radio access (Universal Terrestrial Radio Access, UTRA). UTRA includes wideband CDMA (Wideband Code Division Multiple Access, WCDMA) and other CDMA variants. A TDMA system may implement radio technologies such as global system for mobile communications (Global System for Mobile Communication, GSM). An OFDMA system may implement radio technologies such as ultra mobile broadband (Ultra Mobile Broadband, UMB), evolution UTRA (Evolution-UTRA, E-UTRA), IEEE 802.11 (Wi-Fi), IEEE 802.16 (WiMAX), IEEE 802.20, and Flash-OFDMA. UTRA and E-UTRA are parts of a universal mobile telecommunications system (Universal Mobile Telecommunications System, UMTS). LTE and LTE-advanced (for example, LTE-A) are new releases of UMTS using E-UTRA. UTRA, E-UTRA, UMTS, LTE, LTE-A, and GSM are described in documents of an organization named "3rd generation partnership project" (3rd Generation Partnership Project, 3GPP). CDMA2000 and UMB are described in documents of an organization named "3rd generation partnership project 2" (3GPP2). The technology described in this specification may be applied to the systems and radio technologies mentioned above, and may also be applied to other systems and radio technologies. The following description describes a new radio (New Radio, NR) system for example purposes and uses the NR term in most of the following descriptions, but these technologies may also be applied to applications other than NR system applications, such as 6th generation (6th Generation, 6G) communication systems.

A failure rate for data packets is an index of QoS guarantee, which is generally used for identifying the failure of a single data packet. In some new scenes (for example, XR scenes), a new QoS index and a data set (for example, frame-level) failure rate require to be considered. A data set may include a plurality of data packets. The success and failure situations of the individual data packets may be different. In view of some data packets being delivered successfully and some data packets failing to be transmitted in a data set, how to determine whether the data set is failed or successful is a problem to be solved. Hereinafter, a problem will be described using a PDU Set (protocol data unit set) as a data set.

In a scene, all PDUs in the PDU Set or all data packets in the PDU Set are not completely transmitted. At this moment, the PDU Set is considered to fail to be transmitted. In addition, there are other failure scenes for the PDU Set:
Scene 1: Since a PDU Set may have a plurality of data packets, the data packets are sent to a receiver one by one. It is possible that packet 1 and packet 2 are successfully sent before packet 3 is failed (transmission failure or timeout).

If the PDU Set is a PDU Set in which all data packets require to be completely processed, the PDU Set is determined to be a failed PDU Set in a case that some packets fail to be transmitted.

If not all data packets in the PDU Set require to be completely processed, the PDU Set in which some data packets are delivered successfully may be determined to be a successful PDU Set.

If header data packets in the PDU Set require to be completely processed, the PDU Set in which the header data packets are delivered successfully while other data packets are failed in transmission may be determined to be a successful PDU Set.

If tail data packets in the PDU Set allow to be lost, the PDU Set in which the tail data packets are failed while other data packets are delivered successfully may be determined to be a successful PDU Set.

In one solution, a communication device (for example, a RAN) may obtain: 1) an indicator that all data packets in the PDU Set require to be completely processed; 2) an indicator that header data packets in the PDU Set require to be completely processed; and 3) an indicator that tail data packets in the PDU Set allow to be lost, so as to determine whether the PDU Set in which some data packets are successful while some data packets are failed is a successful PDU Set or a failed PDU Set.

For a better illustration, a PDU Set is mapped by a frame:
Scene 1.1: An I frame includes 100 packets, where the I frame is mapped to a PDU Set, and the PDU Set also has 100 packets. The first 30 packets are delivered successfully to a UE, and the 31^{st} packet has a transmission failure or transmission timeout (exceeding a PDU Set delay budget).

Based on the indicator that all data packets in the PDU Set require to be completely processed, the RAN is required to discard the subsequent packets since the 31^{st} packet is failed. At this moment, the PDU Set should be a failed PDU Set.

In the absence of the indicator that all data packets in the PDU Set require to be completely processed, the PDU Set may be a successful PDU Set.

Based on the indicator that tail data packets in the PDU Set allow to be lost and in a case that the range of tail data is 32-100, the PDU Set may be a successful PDU Set.

Scene 1.2: The PDU Set also has 100 packets. The first packet is failed in sending, and the RAN discards the subsequent 99 packets based on the indicator that all data packets require to be completely processed or the indicator that header data packets require to be completely processed. In this way, all data packets in the PDU Set are not sent. The PDU Set should be a failed PDU Se.

Scene 1.3: The PDU Set also has 100 packets. The first 99 packets are successfully sent, and the 100th packet is failed (sending failure or timeout).

Based on the indicator that all data packets in the PDU Set require to be completely processed, the PDU Set should be a failed PDU Set.

Based on the indicator that tail data packets in the PDU Set allow to be lost, the PDU Set may be a successful PDU Set.

Except for transmission failure and timeout scenes, the communication device (for example, the RAN) may find that some data packets in the PDU Set are lost or the PDU Set is lost entirely after receiving the data packets in the PDU Set.

Scene 2: Some packets in the PDU Set received from N3 are lost.

At this moment, there are many processing modes:
If it is considered that a PDU Set failure rate is a failure rate which cannot be exceeded based on the guarantee of the RAN, the loss of a packet by N3 is obviously not the responsibility of the RAN and should not be incorporated into failure rate statistics of the PDU Set.
(1) For a PDU Set lost entirely, the PDU Set is not incorporated into the numerator of a PDU Set failure rate, and/or is not incorporated into the denominator of the PDU Set.
(2) For a PDU Set in which data packets are lost, the PDU Set may be incorporated into the denominator of the PDU Set, and when other data packets of the PDU Set are successfully transmitted over an air interface, the PDU Set may be successful and not incorporated into the denominator of the PDU Set.

If it is considered that the PDU Set failure rate is a failure rate to be guaranteed by 5GS, the loss of a packet in N3 is obviously the responsibility of 5GS and should be incorporated into failure rate statistics.

Scene 3: Before mapping a PDU Set, a UPF finds that the 31^{st} packet of a data unit received from N6 is lost, resulting in the transmission failure of the PDU Set. At this moment, the failure is not the responsibility of 5GS and should not be incorporated into failure rate statistics. For such a PDU Set, the UPF sends an indicator. The RAN may distinguish between scene 2 and scene 3. Then, scene 4 is excluded, and the PDU Set in scene 3 is not incorporated into failure rate statistics.

For a scene where a data unit is lost entirely, the PDU Set skips such a data unit when assigning sequence numbers, and therefore, the scene is naturally excluded.

For a scene where some data packets in the data unit are lost, the mapped PDU Set has a sequence number.
(1) In this scene, the PDU Set in which data packets are lost is still determined to be a successful PDU Set.
(2) In this scene, the PDU Set in which data packets are lost is determined to be a failed PDU Set. The UPF should indicate to the RAN that the PDU Set has a loss when being received by N6. In this way, the RAN does not take the PDU Set as a failed PDU Set in 5GS.

Another solution is that the UPF makes statistics on a loss rate or loss number of the PDU Set. The RAN subtracts the loss rate of the PDU Set or subtracts the loss number of the PDU Set when making statistics on the failure rate.

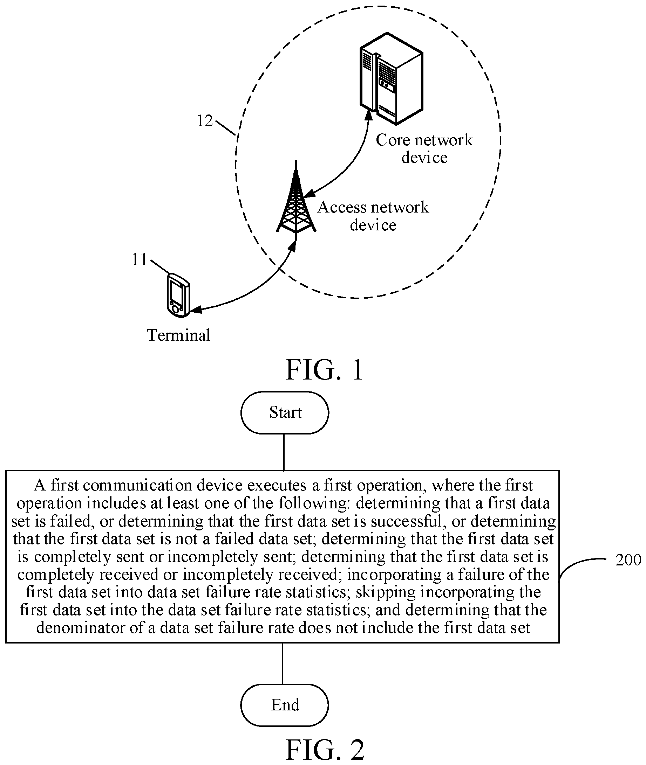

Reference is made to FIG. 1, which is a schematic architectural diagram of a wireless communication system according to embodiments of the present invention. The wireless communication system includes a terminal 11 and a network side device 12. The terminal 11 may be a terminal side device such as a mobile phone, a tablet personal computer (Tabt Personal Computer), a laptop computer (Laptop Computer) or a notebook computer, a personal digital assistant (Personal Digital Assistant, PDA), a palmtop computer, a notebook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (VUE), pedestrian user equipment (PUE), a smart home (a home device with a wireless communication function, such as a refrigerator, a television, a washer or furniture), a game machine, a personal computer (personal computer, PC), a teller machine or a self-service machine. The wearable device includes: a smart watch, a smart bracelet, a smart earphone, smart eyeglasses, smart jewelry (a smart bangle, a smart chain bracelet, a smart ring, a smart necklace, a smart leglet, a smart anklet, and the like), a smart wristband, smart clothing, and the like. It is to be noted that the specific type of the terminal 11 is not limited in this embodiment of this application. The network side device 12 may include an access network device or a core network device. The access network device 12 may also be referred to as a radio access network device, a radio access network (Radio Access Network, RAN), a radio access network function, or a radio access network unit. The access network device 12 may include a base station, a wireless local area network (WLAN) access point or a WiFi node, etc. The base station may be referred to as a node B, an evolution node B (eNB), an access point, a base transceiver station (Base Transceiver Station, BTS), a radio base station, a radio transceiver, a basic service set (Basic Service Set, BSS), an extended service set (Extended Service Set, ESS), a household node B, a household evolution node B, a transmitting receiving point (Transmitting Receiving Point, TRP) or some other appropriate terms in the field provided that the same technical effect is achieved. The base station is not limited to specific technical vocabularies. It is to be noted that in this embodiment of this application, only a base station in an NR system is described as an example, but the specific type of the base station is not limited. The core network device may include, but is not limited to, at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function unit (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), and the like. It is to be noted that in this embodiment of this application, only a core network device in an NR system is described as an example, but the specific type of the core network device is not limited.

Optionally, obtaining may be understood as obtaining from configuration, receiving, receiving after requesting, obtaining through self-learning, obtaining by derivation according to unreceived information, or obtaining after processing according to received information, and may be specifically determined according to actual requirements. This embodiment of the present invention is not limited thereto. For example, when certain capability indication information sent by a device is not received, it may be derived that the device does not support the capability.

Optionally, sending may include broadcasting, broadcasting in a system message, and returning after responding to a request.

In an optional embodiment of the present invention, the communication device may include at least one of the following: a communication network element and a terminal.

In an embodiment of the present invention, the communication network element may include at least one of the following: a core network element and a radio access network element.

In this embodiment of the present invention, the core network element (CN element) may include, but is not limited to, at least one of the following: a core network device, a core network node, a core network function, a core network element, a mobility management entity (Mobility Management Entity, MME), an access management function (Access Management Function, AMF), a session management function (Session Management Function, SMF), a user plane function (User Plane Function, UPF), a serving gateway (serving GW, SGW), a PDN gateway (PDN Gate Way), a policy control function (Policy Control Function, PCF), a policy and charging rules function unit (Policy and Charging Rules Function, PCRF), a GPRS serving support node (Serving GPRS Support Node, SGSN), a gateway GPRS support node (Gateway GPRS Support Node, GGSN), an application function (Application Function), and the like.

In this embodiment of the present invention, the RAN element may include, but is not limited to, at least one of the following: a radio access network device, a radio access network node, a radio access network function, a radio access network unit, a 3GPP radio access network, a non-3GPP radio access network, a centralized unit (Centralized Unit, CU), a distributed unit (Distributed Unit, DU), a base station, an evolved Node B (evolved Node B, eNB), a 5G base station (gNB), a radio network controller (Radio Network Controller, RNC), a base station (NodeB), a non-3GPP inter working function (Non-3GPP Inter Working Function, N3IWF), an access controller (access controller, AC) node, an access point (Access Point, AP) device or a wireless local area network (Wireless Local Area Networks, WLAN) node, and N3IWF.

A base station may be a base transceiver station (BTS, Base Transceiver Station) in GSM or CDMA, or may be a NodeB (NodeB) in WCDMA, or may be an evolutional base station (eNB or e-NodeB, evolutional Node B) in LTE and a 5G base station (gNB). This embodiment of the present invention is not limited thereto.

In an optional embodiment of the present invention, a UE may include one of the following: a terminal device, a terminal device and a card, or a card.

In an optional embodiment of the present invention, the card may include one of the following: a SIM card, a USIM card, and an eSIM card.

In an optional embodiment of the present invention, the terminal may include a relay that supports a terminal function and/or a terminal that supports a relay function. The terminal may also be referred to as a terminal device or user equipment (User Equipment, UE), and the terminal may be other terminal-side devices, such as a mobile phone, a tablet personal computer (Tablet Personal Computer), a laptop computer (Laptop Computer), a personal digital assistant (Personal Digital Assistant, PDA), a mobile Internet device (Mobile Internet Device, MID), a wearable device (Wearable Device) or a vehicle user equipment. It is to be noted that the specific type of the terminal is not limited in this embodiment of the present invention.

In an optional embodiment of the present invention, the concepts of data packets and data are the same and may be mixed.

In an implementation, loss of some data includes loss of some data packets.

In an implementation, header data in a first data set or a header data packet in the first data set is, for example, a first header data packet or a plurality of header data packets in the first data set (for example, including a first data packet to an N2^{th} packet in ascending order, where N2 is an integer greater than or equal to 1).

In an implementation, tail data in the first data set or a tail data packet in the first data set includes: the last one or more data packets in the first data set (for example, including the last data packet to an N1^{th} data packet in descending order, where N1 is an integer greater than or equal to 1).

In an optional embodiment of the present invention, a data set failure rate or a data set failure rate requirement is used for indicating that: it is required to ensure that an actual data set failure rate does not exceed the data set failure rate requirement.

In an optional embodiment of the present invention, the timeout of a data packet includes at least one of the following: a delay budget of the data packet is exceeded, a delay budget of the first data set is exceeded, a waiting time reaches a threshold of a deletion time of the data packet, and the waiting time reaches a threshold of a deletion time of the first data set.

In an embodiment of this application, a data set to which a data packet belongs includes a data set indicated by a data set sequence number carried by the data packet. The data packet may be referred to as a data packet in the data set.

In an embodiment of this application, the condition that all data packets in a first object require to be completely processed includes at least one of the following:
a receiver requires all data packets in the first object;
none of the data packets in the first object is lost; and
in a case that any data packet in the first object is lost, other data of the first object does not require to be transmitted (for example, the data may be discarded).

In an embodiment of this application, the condition that header data packets in a second object require to be completely processed includes at least one of the following:
the receiver requires all header data packets in the second object;
none of the header data packets in the second object is lost; and
in a case that any header data packet in the second object is lost, other data of the second object does not require to be transmitted (for example, the data may be discarded).

In an implementation, the receiver decodes all data packets in the data unit or data set, where the data packets cannot be decoded in a case that one data packet is lost. In an implementation, the receiver decodes all header data packets in the data unit or data set, where the data packets cannot be decoded in a case that one data packet is lost.

In an implementation, the first object includes at least one of the following: a first data set (for example, a first PDU Set), a second data set, a data set (for example, a PDU Set), a data unit, a first data unit, and a second data unit.

In an implementation, the second object includes at least one of the following: a first data set, a second data set, a data set, a data unit, a first data unit, and a second data unit.

In an embodiment of this application, the data set is a concept in a cellular mobile communication network and includes one or more data packets. Optionally, the data set has a boundary.

In an embodiment of this application, the data set is a segment constituted by data packets in a tunnel (for example, a QoS flow, a QoS subflow, or a radio bearer) or a set of data packets.

In an implementation, the data set includes one of the following: a data set instance consisting of one or more data packets, equivalent to a data set category. In other words, data units of the same category may include a plurality of data set instances.

In an optional embodiment of the present invention, the tunnel is a terminal-related tunnel.

In an optional embodiment of the present invention, the tunnel includes at least one of the following: a session (session) (for example, a PDU session, or a session between a RAN and a CN), a QoS flow, a QoS subflow, an evolved packet system (Evolved Packet System, EPS) bearer, a PDP context, a DRB, a signalling radio bearer (Signalling Radio Bearer, SRB), an IPsec association, a GPRS tunnelling protocol (GPRS Tunnelling Protocol, GTP) tunnel (tunnel). The tunnel may be instantiated as any of the above types of tunnels.

In an embodiment of this application, the data set may be one of the following: a packet data unit set (PDU Set), an instance of the PDU Set, a PDU Set category, an instance of the PDU Set category, a data segment or a data set in a tunnel (for example, a QoS flow, a QoS subflow, or a radio bearer).
(1) In an implementation, a type of PDU Set may include a plurality of PDU Set instances. A type of PDU Set may be identified by a PDU Set identifier (for example, a PDU Set-level QoS identifier). The plurality of different PDU Set instances of the same PDU Set may be distinguished by data set sequence numbers (for example, PDU Set sequence numbers).
(2) In another implementation, a PDU Set category may include a plurality of PDU Sets. The PDU Set is an instance of the PDU Set category. The PDU Set category may be identified by a PDU Set identifier (for example, a PDU Set-level QoS identifier). The plurality of different PDU Sets of the same PDU Set category may be distinguished by data set sequence numbers (for example, PDU Set sequence numbers).

In an embodiment of this application, the data set category may be one of the following: a packet data unit set (PDU Set) and a tunnel (for example, a QoS flow, a QoS subflow or a radio bearer). A data set category may correspond to a plurality of data sets. The data set is an instance of the data set category. The data set category may be identified by a data set category identifier. The data set category identifier is, for example, a data set-level QoS identifier. The data set may be distinguished by a sequence number of the data set.

In an implementation, the categories of the one or more data sets are the same, or different. Data sets of different categories may be distinguished by the identifiers of the data sets. Different data sets of the same category may be distinguished by the sequence numbers of the data sets.

In an embodiment of this application, the data flow includes a service data flow (for example, service data flow). The data flow may be referred to as flow or data flow. Optionally, the data unit is a data unit in the service data flow.

In an embodiment of this application, the data unit is also a set of one or more data packets in the service data flow. Optionally, the data unit has a boundary.

In an embodiment of this application, the data unit may be embodied by a data flow. For example, the data unit is described using description information of the data flow.

In an implementation, the data unit includes one of the following: a data unit instance consisting of one or more data packets, equivalent to a data unit category. In other words, data units of the same category may include a plurality of data set instances.

In an optional embodiment of the present invention, the data unit is a data unit of an application layer, and is sent by an application client or the application server. The data unit is a set of one or more data packets.

In an embodiment of this application, the data unit or data unit category includes, but is not limited to, at least one of the following: a GoP (Group of pictures, GoP), a video frame, a video slice (slice), description information of a tile, FOV, DoF, an audio frame, and tactile information. The plurality of data unit categories are the same (for example, a plurality of consecutive B frames) or different (for example, I frames, P frames or B frames). The plurality of data unit categories are the same (for example, a plurality of consecutive B frames) or different (for example, I frames, P frames or B frames).
(1) In an implementation, a data unit may include a plurality of data unit instances. A data unit may be identified by description information of the data unit. The plurality of different data unit instances of the same data unit may be distinguished by boundary information of the data unit (for example, a start tag and an end tag).
(2) In an implementation, a data unit category may include a plurality of data units. The data unit is an instance of the data unit category. A type of data unit may be identified by description information of the data unit. The plurality of different data units of the same data unit category may be distinguished by boundary information of the data unit (for example, a start tag and an end tag).

In an optional embodiment of the present invention, the description information of a data flow includes at least one of the following: description information of one or more data sets, service type information, a fully qualified domain name (Fully Qualified Domain Name, FQDN), a source IP address, a destination IP address, a source port, a destination end, a protocol number, a source media access control (Media Access Control, MAC) address, a destination MAC address, a service application (Application) identifier, an operating system (operating system, OS) identifier, a packet detection rule (packet detection rule, PDR), and a data network name (Data Network Name, DNN).

In an optional embodiment of the present invention, data and data packets have one meaning.

In an optional embodiment of the present invention, a data set or a dataset has one meaning. A data set includes one or more data. Generally speaking, the importance of data in a data set may be the same. The importance of data in different data sets may be different.

In an optional embodiment of the present invention, the description information of the data and/or the description information of the data set includes at least one of the following: an importance level, description information of GoP (Group of pictures, GoP), description information of a frame, description information of a slice, description information of a tile, description information of FOV, and description information of DoF.

In an implementation, the description information of a frame includes at least one of the following: a frame type of the frame (for example, but not limited to, an I frame, a P frame or a B frame), and the number of data packets included in the frame.

In an implementation, the description information of a slice (slice) includes at least one of the following: a slice type of the slice (for example, but not limited to, an I slice, a P slice or a B slice), and the number of data packets included in the slice.

In an implementation, the description information of a tile includes at least one of the following: a tile type of the tile (for example, but not limited to, an I tile, a P tile or a B tile), and the number of data packets included in the tile.

In an implementation, the description information of GOP includes at least one of the following: a frame type included in GOP, a frame occurrence order, and the number of data packets included.

In an optional embodiment of the present invention, the description information of the data flow and/or the description information of the data set may be embodied as packet filter information or data packet detection information.

In an optional embodiment of the present invention, the tunnel may include at least one of the following: a PDU session, a quality of service (Quality of Service, QoS) flow, a QoS subflow, an evolved packet system (Evolved Packet System, EPS) bearer, a PDP context, DRB, SRB, and an Internet protocol security (Internet Protocol Security, IPsec) association.

In an embodiment of the present invention, the NG interface may also be referred to as an S1 interface or an N2 interface, and the naming is not limited.

In an embodiment of the present invention, a wireless communication network may be at least one of the following: a public network and a non-public network; or the first network may be a non-public network.

In an embodiment of the present invention, the non-public network is an abbreviation of a non-public network. The non-public network may be referred to as one of the following: a non-public communication network. The non-public network may include at least one of the following deployment modes: a physical non-public network, a virtual non-public network, and a non-public network implemented on the public network. In an implementation, the non-public network is a closed access group (Closed Access Group, CAG). A CAG may consist of a group of terminals.

In an embodiment of the present invention, the non-public network may include or be referred to as a private network. The private network may be referred to as one of the following: a private communication network, a private network, a local area network (LAN), a private virtual network (PVN), an isolated communication network, a private communication network, or other naming. It is to be noted that in this embodiment of the present invention, the naming mode is not specifically limited.

In an embodiment of the present invention, the public network is an abbreviation of a public network. The public network may be referred to as one of the following: a public communication network or other naming. It is to be noted that in this embodiment of the present invention, the naming mode is not specifically limited.

In an embodiment of the present invention, a data packet size may be referred to as a data packet length.

In an embodiment of the present invention, a data packet may be referred to as a data frame.

In an optional embodiment of the present invention, the communication device may include at least one of the following: a communication network element and a terminal.

In an embodiment of the present invention, the communication network element may include at least one of the following: a core network element and a radio access network element.

In this embodiment of the present invention, the core network element (CN element) may include, but is not limited to, at least one of the following: a core network device, a core network node, a core network function, a core network element, a mobility management entity (Mobility Management Entity, MME), an access management function (Access Management Function, AMF), a session management function (Session Management Function, SMF), a user plane function (User Plane Function, UPF), a serving gateway (serving GW, SGW), a PDN gateway (PDN Gate Way), a policy control function (Policy Control Function, PCF), a policy and charging rules function unit (Policy and Charging Rules Function, PCRF), a GPRS serving support node (Serving GPRS Support Node, SGSN), a gateway GPRS support node (Gateway GPRS Support Node, GGSN), an application function (Application Function), and the like.

In this embodiment of the present invention, the RAN element may include, but is not limited to, at least one of the following: a radio access network device, a radio access network node, a radio access network function, a radio access network unit, a 3GPP radio access network, a non-3GPP radio access network, a centralized unit (Centralized Unit, CU), a distributed unit (Distributed Unit, DU), a base station, an evolved Node B (evolved Node B, eNB), a 5G base station (gNB), a radio network controller (Radio Network Controller, RNC), a base station (NodeB), a non-3GPP inter working function (Non-3GPP Inter Working Function, N3IWF), an access controller (access controller, AC) node, an access point (Access Point, AP) device or a wireless local area network (Wireless Local Area Networks, WLAN) node, and N3IWF.

A base station may be a base transceiver station (BTS, Base Transceiver Station) in GSM or CDMA, or may be a NodeB (NodeB) in WCDMA, or may be an evolutional base station (eNB or e-NodeB, evolutional Node B) in LTE and a 5G base station (gNB). This embodiment of the present invention is not limited thereto.

In an optional embodiment of the present invention, a UE may include one of the following: a terminal device, a terminal device and a card, or a card.

In an optional embodiment of the present invention, the card may include one of the following: a SIM card, a USIM card, and an eSIM card.

In an optional embodiment of the present invention, the terminal may include a relay that supports a terminal function and/or a terminal that supports a relay function. The terminal may also be referred to as a terminal device or user equipment (User Equipment, UE), and the terminal may be other terminal-side devices, such as a mobile phone, a tablet personal computer (Tablet Personal Computer), a laptop computer (Laptop Computer), a personal digital assistant (Personal Digital Assistant, PDA), a mobile Internet device (Mobile Internet Device, MID), a wearable device (Wearable Device) or a vehicle user equipment. It is to be noted that the specific type of the terminal is not limited in this embodiment of the present invention.

In this embodiment of the present invention, N6 is an interface between a gateway of a network and a data network (data network), and N6 may also be referred to by other names.

Hereinafter, a data processing method according to embodiments of the present invention will be described.

Referring to FIG. 2, embodiments of the present invention provide a data processing method applied to a first communication device. The first communication device includes, but is not limited to, a RAN element, a terminal, and a CN element (for example but not limited to an anchor gateway (such as a UPF)). The anchor gateway is a gateway terminating an N6 interface (N6 is an interface between a gateway of a network and a data network (data network), and N6 may also be referred to by other names. The first communication device may be referred to as a first CN element when the first communication device is a CN element. The method includes the following steps:

Step 200: A first communication device executes a first operation, where the first operation includes at least one of the following:
determining that a first data set is failed, or determining that the first data set is successful, or determining that the first data set is not a failed data set;
determining that the first data set is completely sent or incompletely sent;
determining that the first data set is completely received or incompletely received;
incorporating a failure of the first data set into data set failure rate statistics;
skipping incorporating the first data set into the data set failure rate statistics; and
determining that the denominator of a data set failure rate does not include the first data set.

Optionally, in a case of determining that the first data set is failed, the first operation further includes at least one of the following:
determining that a second data set is failed, where the second data set is a data set dependent on the first data set; and
incorporating a failure of the second data set into the data set failure rate statistics.

In some optional embodiments, determining that a first data set is failed includes:
in a case that the first data set satisfies a first condition, determining that the first data set is failed, where
the first condition includes at least one of the following:
some data packets in the first data set fail to be transmitted;
timeout of some data packets in the first data set occurs;
all data packets in the first data set require to be completely processed;
a first indicator is obtained, where the first indicator is used for indicating at least one of the following: all data packets in the first data set require to be completely processed;
   and/or,
the first condition includes at least one of the following:
   the first data set is lost entirely;
   some data packets in the first data set are lost;
   some data packets in the first data set fail to be transmitted;
   timeout of some data packets in the first data set occurs;
   all data packets in the first data set require to be completely processed;
   a first indicator is obtained, where the first indicator is used for indicating at least one of the following: all data packets in the first data set require to be completely processed;
      and/or,
   the first condition includes at least one of the following:
      some or all header data packets in the first data set fail to be transmitted;
      timeout of some or all header data packets in the first data set occurs;
      all header data packets in the first data set require to be completely processed;
      a second indicator is obtained, where the second indicator is used for indicating at least one of the following: all header data packets in the first data set require to be completely processed, and information about the range of header data packets requires to be completely processed;
         and/or,
      the first condition includes at least one of the following:
         some or all header data packets in the first data set are lost;
         some or all header data packets in the first data set fail to be transmitted;
         timeout of some or all header data packets in the first data set occurs;
         all header data packets in the first data set require to be completely processed;
         a second indicator is obtained, where the second indicator is used for indicating at least one of the following: all header data packets in the first data set require to be completely processed, and information about the range of header data packets requires to be completely processed.

In an implementation, the first communication device determines, according to the first indicator, all data packets in the first data set require to be completely processed.

In an implementation, the first communication device determines, according to the second indicator, all header data packets in the first data set require to be completely processed.

In an implementation, when header data includes a plurality of data packets, the condition that the header data is failed includes that some or all data packets of the header data fail to be transmitted. In an implementation, when header data is a first data packet, the condition that the header data fail to be transmitted is that the first data packet is failed.

In an implementation, when header data includes a plurality of data packets, the timeout of the header data includes the timeout of some or all data packets of the header data. In an implementation, when header data is a first data packet, the timeout of the header data is the timeout of the first data packet.

Optionally, the timeout of a data packet includes at least one of the following: a delay budget of the data packet is exceeded, a delay budget of the first data set is exceeded, a waiting time reaches a threshold of a deletion time of the data packet, and the waiting time reaches a threshold of a deletion time of the first data set.

Optionally, information about the range of header data packets requiring to be completely processed includes: the number of header data packets requiring to be completely processed (for example, including a first packet to an N^{th} packet in ascending order, where N is a positive integer), and/or a ratio of the header data packets requiring to be completely processed to all data packets in the data set (for example, a ratio of the first packet to the N^{th} packet in ascending order to all data packets).

The first communication device obtains, from a first target device, at least one of the following: a first indicator, a second indicator and a fifth indicator. The first target device includes, but is not limited to, at least one of the following: a second communication device, a RAN element, and a CN element (including but not limited to one of the following: AMF, SMF, PCF, UPF, NEF, and AF).

In some optional embodiments, the condition that some data packets in the first data set are lost includes at least one of the following:
some data packets in the first data set are lost inside a first network;
some data packets in the first data set are lost inside the first communication device;
   and/or,
the condition that the first data set is lost entirely includes at least one of the following:
   the first data set is lost entirely inside the first network;
   the first data set is lost entirely inside the first communication device;
      and/or,
   the condition that header data in the first data set is lost includes at least one of the following:
      header data in the first data set is lost inside the first network;
      header data in the first data set is lost inside the first communication device.

The first network includes at least one of the following: a network where the first communication device is located, a network supported by the first communication device, a network accessed by a terminal, a network accessed by the terminal through the first communication device, and a cellular mobile communication network.

In some optional embodiments, determining that the first data set is not a failed data set and/or skipping incorporating the first data set into the data set failure rate statistics includes:

in a case that the first data set satisfies a second condition, determining that the first data set is not a failed data set, and/or skipping incorporating the first data set into the data set failure rate statistics,
where the second condition includes at least one of the following:
the first data set is lost entirely;
some data in the first data set is lost;
a third indicator is obtained, where the third indicator is used for indicating one of the following: some data packets in the first data set are lost, the first data set is lost entirely, some data packets in the first data set are lost outside the first network, some data packets in the first data set are lost outside the first communication device, the first data set is lost entirely outside the first network, and the first data set is lost entirely outside the first communication device;
first information is obtained, where the first information includes at least one of the following: information of data packets in the first data set lost outside the first network, and information of data sets lost outside the first network;
   and/or,
the second condition includes at least one of the following:
   header data in the first data set is lost;
   a fourth indicator is obtained, where the fourth indicator is used for indicating one of the following: header data in the first data set is lost, header data in the first data set is lost outside the first network, and header data in the first data set is lost outside the first communication device;
   second information is obtained, where the second information includes: information of header data packets in the first data set lost outside the first network.

The outside of the first network includes: an interface between the first network and a data network (for example, an N6 interface).

The first network includes at least one of the following: a network where the first communication device is located, a network supported by the first communication device, a network accessed by a terminal, a network accessed by the terminal through the first communication device, and a cellular mobile communication network.

The first communication device obtains, from a second target device, at least one of the following: a third indicator, first information, a fourth indicator, and second information.

The second target device includes, but is not limited to, at least one of the following: a third communication device, a RAN element, and a CN element (including but not limited to one of the following: UPF, anchor gateway, AMF, SMF, PCF, NEF, and AF).

The third indicator, the first information, the fourth indicator, and/or the second information may be carried by a data packet in a packet header.

Optionally,
the condition that some data packets in the first data set are lost includes at least one of the following:
some data packets in the first data set are lost outside the first network;
some data packets in the first data set are lost outside the first communication device;
   and/or,
the condition that the first data set is lost entirely includes at least one of the following:
   the first data set is lost entirely outside the first network;
   the first data set is lost entirely outside the first communication device;
      and/or,
   the condition that header data in the first data set is lost includes at least one of the following:
      header data in the first data set is lost outside the first network;
      header data in the first data set is lost outside the first communication device.

In an implementation, the data set failure rate is a data set failure rate requiring to be ensured by the first network. Therefore, in a case that some data packets in the first data set are lost or the first data set is lost entirely outside the first network, it is determined that the first data set is not a failed data set and/or the first data set is not incorporated into the data set failure rate statistics.

In another implementation, the data set failure rate is a data set failure rate requiring to be ensured by the first communication device. Therefore, in a case that some data packets in the first data set are lost or the first data set is lost entirely outside the first communication device, the first data set cannot be incorporated into the data set failure rate statistics.

In an implementation, according to the first information, at least one of the following may be determined:
the first data set is lost entirely, and the first data set is lost entirely outside the first network; and
some data packets in the first data set are lost, and some data packets in the first data set are lost outside the first network.

Optionally, the information of the data set includes a sequence number of the data set.

Optionally, the information of the data packet includes at least one of the following: a sequence number of a data set to which the data packet belongs, and a packet sequence number of the data packet in the data set.

In some optional embodiments, determining that the first data set is successful or skipping incorporating the first data set into the data set failure rate statistics includes:
in a case that a third condition is satisfied, determining that the first data set is successful, or skipping incorporating the first data set into the data set failure rate statistics,
where the third condition includes at least one of the following:
   all data packets in the first data set are delivered successfully;
   some data packets in the first data set are delivered successfully, and/or some data packets fail;
   all data packets in the first data set do not require to be completely processed;
   a first indicator is not obtained, where the first indicator is used for indicating at least one of the following: all data packets in the first data set require to be completely processed;
      and/or,
   the third condition includes at least one of the following:
      all header data packets in the first data set are delivered successfully;
      some header data packets in the first data set are delivered successfully, and/or some header data packets fail;
      header data packets in the first data set do not require to be completely processed;
      all data packets in the first data set do not require to be completely processed;
      a first indicator is not obtained, where the first indicator is used for indicating at least one of the following: all data packets in the first data set require to be completely processed;
      a second indicator is not obtained, where the second indicator is used for indicating at least one of the following: all header data packets in the first data set require to be completely processed, and information about the range of header data packets requires to be completely processed;
         and/or,
      the third condition includes at least one of the following:
         all header data packets in the first data set are delivered successfully, and/or some or all data packets other than header data in the first data set fail;
         all header data packets in the first data set require to be completely processed;
         a second indicator is obtained, where the second indicator is used for indicating at least one of the following: all header data packets in the first data set require to be completely processed, and information about the range of header data packets requires to be completely processed;
            and/or,
         the third condition includes at least one of the following:
            data packets other than tail data packets in the first data set are delivered successfully, and/or some or all tail data packets in the first data set fail;
            tail data in the first data set allows to be lost;
            all data other than tail data in the first data set requires to be completely processed;
            a fifth indicator is obtained, where the fifth indicator is used for indicating at least one of the following: tail data in the first data set allows to be lost, and information about the range of tail data packets allows to be lost.

Optionally,
in a case that some data in the first data set is lost, all data packets in the first data set are: all data packets other than the lost data packets in the first data set;
   and/or,
in a case that some data of header data in the first data set is lost, all header data packets in the first data set are: all header data packets other than the lost data packets in the first data set;
   and/or,
the condition that data packets are failed includes at least one of the following: data packets fail to be transmitted, and timeout of data packets occurs.

Optionally, the condition that header data packets are failed includes at least one of the following: header data packets fail to be transmitted, and timeout of header data packets occurs.

The condition that tail data packets are failed includes at least one of the following: tail data packets fail to be transmitted, and timeout of tail data packets occurs.

Optionally, the information about the range of tail data packets allowing to be lost includes: the number of tail data packets allowing to be lost (for example, including the last packet to an N^{th} packet in descending order, where N is a positive integer), and/or a ratio of the tail data packets allowing to be lost to all data packets in the data set (for example, a ratio of the last packet to the N^{th} packet in descending order to all data packets).

The timeout of a data packet includes at least one of the following: a delay budget of the data packet is exceeded, a delay budget of the first data set is exceeded, a waiting time reaches a threshold of a deletion time of the data packet, and the waiting time reaches a threshold of a deletion time of the first data set.

In some optional embodiments, determining whether some data packets in the first data set are lost includes at least one of the following:
determining, by the first communication device according to data information carried in received data packets, whether some data in the first data set is lost;
   and/or,
determining whether the first data set is lost entirely includes at least one of the following:
   determining, by the first communication device according to sequence numbers of data sets carried in received data packets, whether the first data set is lost entirely.

In an implementation, data information carried by a data packet is located in a packet header of the data packet.

In an implementation, it is determined, according to sequence numbers of data sets carried in received data packets, whether the first data set is lost entirely. For example, data packets in data set 2 and data packets in data set 4 are received, but data packets in data set 4 have not been received. Then, it may be determined that data set 3 is lost entirely.

In an implementation, it is determined, according to data information carried in received data packets, whether some data in the first data set is lost. For example, the sequence number of a data packet inside is 4, but the first communication device has received packets of 3 and 5 and has not received the packet of 4. Then, the packet having a sequence number of 4 is lost.

For example, if a packet with a start tag is not received, it is determined that the header packet is lost.

For example, if a packet with an end tag is not received, it is determined that the tail packet is lost.

Optionally, the data information includes at least one of the following: packet sequence numbers of data packets in the first data set, a start tag of the first data set, an end tag of the first data set, and the number of data packets in the first data set.

In some optional embodiments of this application, in a case that the first communication device is a terminal, the first operation further includes:
sending, to a RAN element and/or a CN element, at least one of the following: a data set failure rate, a data set success rate, sequence numbers of successful data sets, the number of successful data sets, sequence numbers of failed data sets, and the number of failed data sets.

In some optional implementations, the operations performed by the terminal include at least one of the following:
sending sequence numbers, quantities, and/or ratios of successfully transmitted PDU Sets to the RAN element and/or the CN element;
sending ACK information of PDU Set granularity to the RAN element and/or the CN element;
sending sequence numbers, quantities, and/or ratios of failed PDU Sets to the RAN element and/or the CN element; and
sending uplink data, where the uplink data carries header information of a PDU Set, the header information of the PDU Set is used for assisting the first communication device in determining the integrity of received data and copying the received header information of the PDU Set into a GTP-U header.

Optionally, determining that the denominator of a data set failure rate does not include the first data set includes:
in a case that a fourth condition is satisfied, determining that the denominator of the data set failure rate does not include the first data set,
where the fourth condition includes at least one of the following:
   the first data set is lost entirely;
   the first data set is lost entirely outside the first network.

It is to be noted that a tunnel (for example, a QoS flow, a QoS subflow or a radio bearer) may include one or more data set categories. When a QoS tunnel includes only one data set category, the data set failure rate in the QoS tunnel is equal to the data set failure rate of the data set category.

Optionally, skipping incorporating the first data set into the data set failure rate statistics includes at least one of the following: the denominator of the data set failure rate does not include the first data set, and the numerator of the data set failure rate does not include the first data set.

Optionally, the method further includes:
obtaining third information, where the third information includes at least one of the following: the data set failure rate requirement, range information of data sets corresponding to the data set failure rate requirement, the first indicator, the second indicator, and the fifth indicator; and
executing one or more of the operations in the first operation according to the third information,

At this moment, the first operation may further include: ensuring that an actual data set failure rate does not exceed the data set failure rate requirement; and
obtaining the data set failure rate requirement from a first target device, where the first target device includes at least one of the following: a second communication device, a RAN element, and a CN element (including but not limited to one of the following: AMF, SMF, PCF, UPF, NEF, and AF).

It is to be noted that an actual data set failure rate does not exceed the data set failure rate requirement.

The first indicator is used for indicating at least one of the following: all data packets in the first data set require to be completely processed.

The second indicator is used for indicating at least one of the following: all header data packets in the first data set require to be completely processed, and information about the range of header data packets requires to be completely processed.

The fifth indicator is used for indicating at least one of the following: tail data in the first data set allows to be lost, and information about the range of tail data packets allows to be lost.

The first communication device obtains third information from a first target device, where the first target device includes, but is not limited to, at least one of the following: a second communication device, a RAN element, and a CN element (including but not limited to one of the following: AMF, SMF, PCF, UPF, NEF, and AF).

Optionally, the granularity of the data set failure rate includes at least one of the following:
a data set failure rate of the terminal;
a data set failure rate in a tunnel;
a data set failure rate of a data set category;
a data set failure rate of one or more data set categories in the tunnel;
   and/or,
the granularity of the data set failure rate requirement includes at least one of the following:
   a data set failure rate requirement of the terminal;
   a data set failure rate requirement in the tunnel;
   a data set failure rate requirement of the data set category;
   a data set failure rate requirement of one or more data set categories in the tunnel.

In this embodiment of the present invention, a first communication device executes a first operation, where the first operation includes at least one of the following: determining that a first data set is failed, or determining that the first data set is successful, or determining that the first data set is not a failed data set; determining that the first data set is completely sent or incompletely sent; determining that the first data set is completely received or incompletely received; incorporating a failure of the first data set into data set failure rate statistics; skipping incorporating the first data set into the data set failure rate statistics; and determining that the denominator of a data set failure rate does not include the first data set. Therefore, the first communication device considers the transmission situation of various data sets, realizes the determination of the success of the data sets and/or how to determine the failure of the data sets, and thus can realize accurate statistics of a data set failure rate.

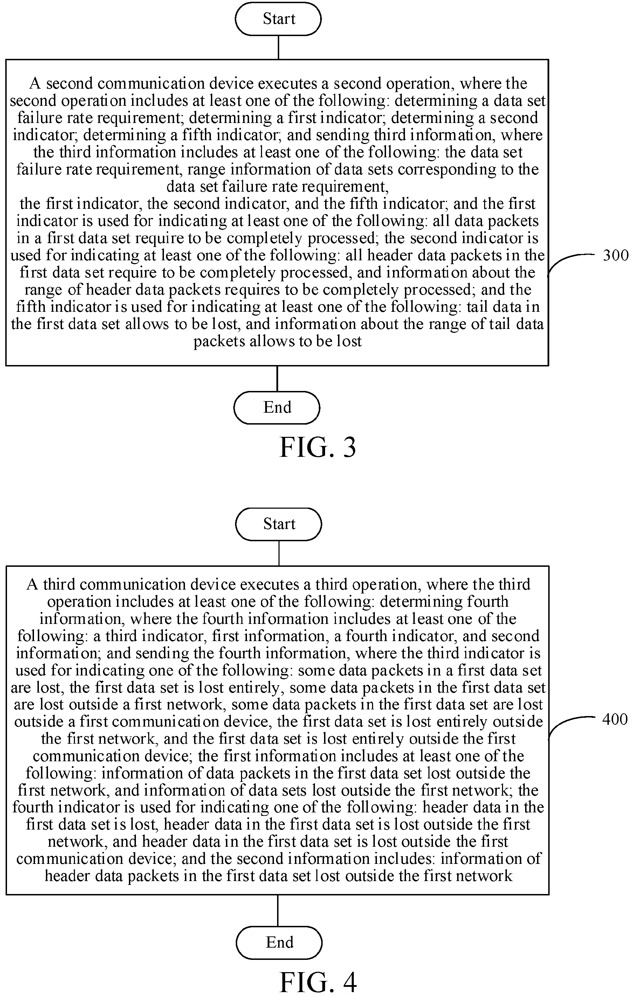

Referring to FIG. 3, embodiments of the present invention provide a data processing method applied to a second communication device. The second communication device includes, but is not limited to, a CN element (including but not limited to one of the following: AMF, SMF, PCF, UPF, NEF, and AF). When the second communication device is a CN element, the second communication device may be referred to as a second CN element. The method includes the following steps:

Step 300: A second communication device executes a second operation, where the second operation includes at least one of the following:
determining a data set failure rate requirement;
determining a first indicator;
determining a second indicator;
determining a fifth indicator; and
sending third information, where the third information includes at least one of the following: the data set failure rate requirement, range information of data sets corresponding to the data set failure rate requirement, the first indicator, the second indicator, and the fifth indicator;
the first indicator is used for indicating at least one of the following: all data packets in a first data set require to be completely processed;
the second indicator is used for indicating at least one of the following: all header data packets in the first data set require to be completely processed, and information about the range of header data packets requires to be completely processed; and
the fifth indicator is used for indicating at least one of the following: tail data in the first data set allows to be lost, and information about the range of tail data packets allows to be lost.

In some optional embodiments, the second communication device sends the third information to a first target end, where the first target end includes at least one of the following: a first communication device, a RAN element and a terminal.

The range information of the data set includes an identifier of one or more data sets (for example, a data set-level QoS identifier).

In an implementation, the data set-level QoS identifier includes a data set-level 5QI.

Optionally, sending the data set failure rate requirement includes at least one of the following:
sending through terminal-level signaling or cells;
sending through tunnel-level signaling or cells; and
sending through data set category or QoS subflow-level signaling or cells.

In an implementation, the data set failure rate requirement for sending through terminal-level signaling or cells is: a data set failure rate requirement of the terminal.

In an implementation, the data set failure rate requirement for sending through tunnel-level signaling or cells is: a data set failure rate requirement in the tunnel.

In an implementation, the data set failure rate requirement for sending through data set category or QoS subflow-level (for example, one QoS subflow corresponds to one data set category) signaling or cells is: a data set failure rate requirement of the data set category.

In an implementation, if the granularity of the data set failure rate is the data set failure rate of one or more data set categories in the tunnel, the data set failure rate requirement may be sent using the tunnel-level signaling or cells. In addition, range information of data sets corresponding to the data set failure rate requirement may also be sent. The range information of data sets may include categories of one or more data sets.

Optionally, a data set failure contained in the data set failure rate requirement includes at least one of the following:
a data set satisfying a fifth condition, where
the fifth condition includes at least one of the following:
   some data packets in the data set fail to be transmitted;
   timeout of some data packets in the data set occurs (for example, exceeding a delay budget of the data set);
   all data packets in the data set require to be completely processed;
      and/or,
   the fifth condition includes at least one of the following:
      the data set is lost entirely;
      some data packets in the data set are lost;
      some data packets in the data set fail to be transmitted;
      timeout of some data packets in the data set occurs (for example, exceeding a delay budget of the data set);
      all data packets in the data set require to be completely processed;
         and/or,
      the fifth condition includes at least one of the following:
         some or all header data packets in the data set fail to be transmitted;
         timeout of some or all header data packets in the data set occurs;
         all header data packets in the data set require to be completely processed;
            and/or,
         the fifth condition includes at least one of the following:
            some or all header data packets in the data set are lost;
            some or all header data packets in the data set fail to be transmitted;
            timeout of some or all header data packets in the data set occurs;
            all header data packets in the data set require to be completely processed;
               and/or,
            the fifth condition includes at least one of the following:
               all data in the data set fails to be transmitted;
               timeout of all data in the data set occurs.

Optionally, determining a data set failure rate requirement includes:
obtaining a data unit level failure rate requirement of a data flow, and determining the data set failure rate requirement according to the data unit level failure rate requirement,
where the data set is a data set mapped by a data unit in a first network; and
the data unit includes one or more data packets.

In some optional embodiments, the second communication device obtains a data unit-level failure rate requirement of the data flow from a third target device, where the third target device includes: AF and NEF.

In an implementation, the data set is a data set in a terminal-related tunnel in the first network.

Optionally, determining a fifth indicator includes:
obtaining a sixth indicator of a data unit level of a data flow, and determining the fifth indicator according to the sixth indicator,
where
the data set is a data set mapped by the data unit.

In this embodiment of the present invention, a second operation is executed, where the second operation includes at least one of the following: determining a data set failure rate requirement; determining a first indicator; determining a second indicator; determining a fifth indicator; and sending third information, where the third information includes at least one of the following: the data set failure rate requirement, range information of data sets corresponding to the data set failure rate requirement, the first indicator, the second indicator, and the fifth indicator. Therefore, a first communication device can realize, according to the third information, the determination of the success of data sets and/or how to determine the failure of the data sets, and thus realize accurate statistics of a data set failure rate.

Referring to FIG. 4, embodiments of the present invention provide a data processing method applied to a third communication device. The third communication device includes, but is not limited to, at least one of the following: a CN element (including but not limited to one of the following: UPF, anchor gateway, AMF, SMF, PCF, NEF, and AF). When the third communication device is a CN element, the second communication device may be referred to as a third CN element. The method includes the following steps:
Step 400: A third communication device executes a third operation, where the third operation includes at least one of the following:
determining fourth information, where the fourth information includes at least one of the following: a third indicator, first information, a fourth indicator, and second information; and
sending the fourth information,
where
the third indicator is used for indicating one of the following: some data packets in a first data set are lost, the first data set is lost entirely, some data packets in the first data set are lost outside a first network, some data packets in the first data set are lost outside a first communication device, the first data set is lost entirely outside the first network, and the first data set is lost entirely outside the first communication device;
the first information includes at least one of the following: information of data packets in the first data set lost outside the first network, and information of data sets lost outside the first network;
the fourth indicator is used for indicating one of the following: header data in the first data set is lost, header data in the first data set is lost outside the first network, and header data in the first data set is lost outside the first communication device; and
the second information includes: information of header data packets in the first data set lost outside the first network.

In some optional embodiments, the third communication device sends the fourth information to a first target end, where the first target end includes at least one of the following: a first communication device, a RAN element and a terminal.

In an implementation, the fourth information may be carried in a packet header of a data packet for sending.

Optionally, determining fourth information includes:
in a case that a sixth condition is satisfied, determining the third indicator and/or the first information, where
the sixth condition includes at least one of the following:
   the third communication device finds that some data packets of a first data unit are lost;
   the third communication device finds that some data units of a first data unit category are lost entirely;
      and/or,
   in a case that a seventh condition is satisfied, determining the fourth indicator and/or the second information, where
   the seventh condition includes at least one of the following:
      the third communication device finds that header data packets of the first data unit are lost,
      where
      the first data unit is a data unit in a data flow mapping the first data set;
      the first data unit category is a data unit category in the data flow mapping the first data set;
      the first data unit includes one or more data packets.

In this embodiment of the present invention, a third operation is executed to determine fourth information, where the fourth information includes at least one of the following: a third indicator, first information, a fourth indicator, and second information. The fourth information is sent. Therefore, a first communication device can realize, according to the fourth information, the determination of the success of data sets and/or how to determine the failure of the data sets, and thus realize accurate statistics of a data set failure rate.

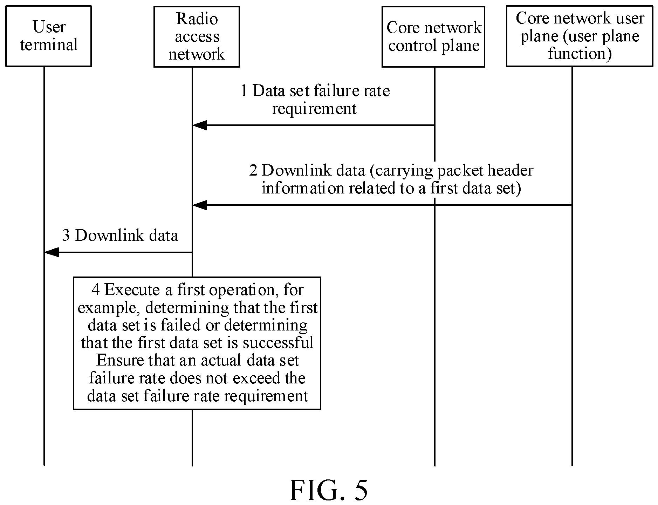

Application scene 1 of this embodiment of the present invention mainly describes a process in which a RAN element determines a transmission state of a downlink protocol data unit set. As shown in FIG. 5, the method includes the following steps:
Step 1: A core network control plane (CN CP) sends a data set failure rate requirement to a RAN element.
Step 2: A core network user plane (CN UP, for example but not limited to an anchor gateway) sends downlink data to the RAN element, where a packet header (such as a GTP-U header) of the downlink data packet carries data information of a first data set. The data information includes at least one of the following: packet sequence numbers of data packets in the first data set, a start tag of the first data set, an end tag of the first data set, and the number of data packets in the first data set.
Step 3: The RAN element forwards the downlink data to a UE.
Step 4: The RAN element executes a first operation (specifically as described in the embodiment of FIG. 2), for example, determining that the first data set is failed or determining that the first data set is successful. It is ensured that an actual data set failure rate does not exceed a data set failure rate requirement.

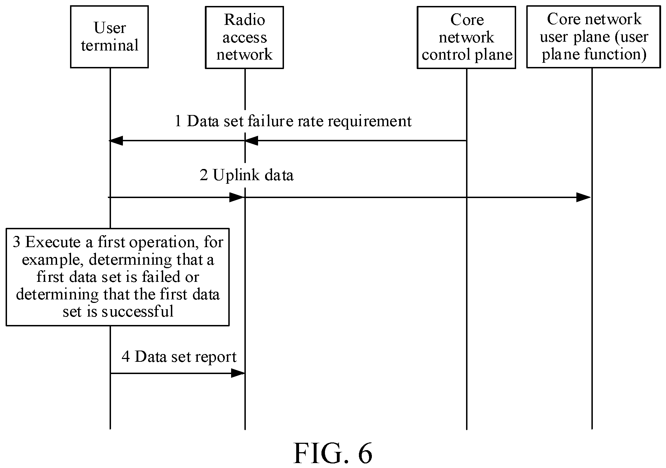

Application scene 2 of this embodiment of the present invention:
mainly describing a process in which a UE determines a transmission state of an uplink protocol data unit set. As shown in FIG. 6, the method includes the following steps:
Step 1: A core network control plane (CN CP) or a RAN element sends a data set failure rate requirement to a terminal.
Step 2: A UE sends uplink data to the RAN element.
Step 3: The UE determines that a first data set executes a first operation (specifically as described in the embodiment of FIG. 2), for example, determining that the first data set is failed or determining that the first data set is successful.
Step 4: The UE sends a data set report to the RAN, including at least one of the following: a data set failure rate, a data set success rate, sequence numbers of successful data sets, the number of successful data sets, sequence numbers of failed data sets, and the number of failed data sets.

The executing main body of the data processing method provided by this embodiment of this application may be a communication device. In this embodiment of this application, the communication device provided by this embodiment of this application is explained with an example where the communication device performs the data processing method.

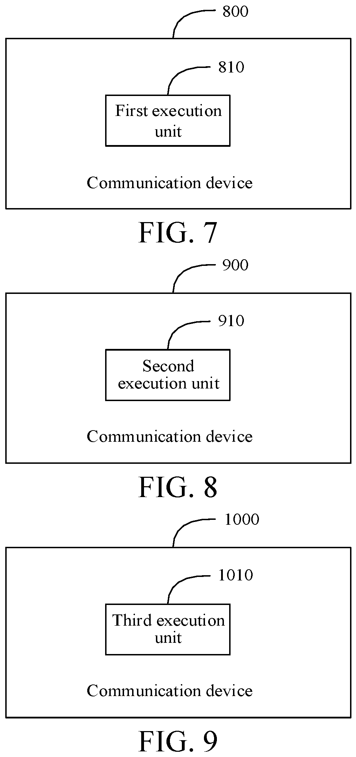

FIG. 7 is a first schematic structural diagram of a communication device according to embodiments of this application. As shown in FIG. 7, the communication device is a first communication device. The communication device 800 includes:
a first execution unit 810, configured to execute a first operation, where the first operation includes at least one of the following:
determining that a first data set is failed, or determining that the first data set is successful, or determining that the first data set is not a failed data set;
determining that the first data set is completely sent or incompletely sent;
determining that the first data set is completely received or incompletely received;
incorporating a failure of the first data set into data set failure rate statistics;
skipping incorporating the first data set into the data set failure rate statistics; and
determining that the denominator of a data set failure rate does not include the first data set.

Optionally, in a case of determining that the first data set is failed, the first operation further includes at least one of the following:
determining that a second data set is failed, where the second data set is a data set dependent on the first data set; and
incorporating a failure of the second data set into the data set failure rate statistics.

Optionally, determining that a first data set is failed includes:
in a case that the first data set satisfies a first condition, determining that the first data set is failed, where
the first condition includes at least one of the following:
   some data packets in the first data set fail to be transmitted;
   timeout of some data packets in the first data set occurs;
   all data packets in the first data set require to be completely processed;
   a first indicator is obtained, where the first indicator is used for indicating at least one of the following: all data packets in the first data set require to be completely processed;
      and/or,
   the first condition includes at least one of the following:
      the first data set is lost entirely;
      some data packets in the first data set are lost;
      some data packets in the first data set fail to be transmitted;
      timeout of some data packets in the first data set occurs;
      all data packets in the first data set require to be completely processed;
      a first indicator is obtained, where the first indicator is used for indicating at least one of the following: all data packets in the first data set require to be completely processed;
         and/or,
      the first condition includes at least one of the following:
         some or all header data packets in the first data set fail to be transmitted;
         timeout of some or all header data packets in the first data set occurs;
         all header data packets in the first data set require to be completely processed;
         a second indicator is obtained, where the second indicator is used for indicating at least one of the following: all header data packets in the first data set require to be completely processed, and information about the range of header data packets requires to be completely processed;
            and/or,
         the first condition includes at least one of the following:
            some or all header data packets in the first data set are lost;
            some or all header data packets in the first data set fail to be transmitted;
            timeout of some or all header data packets in the first data set occurs;
            all header data packets in the first data set require to be completely processed;
            a second indicator is obtained, where the second indicator is used for indicating at least one of the following: all header data packets in the first data set require to be completely processed, and information about the range of header data packets requires to be completely processed.

Optionally, the condition that some data packets in the first data set are lost includes at least one of the following:
some data packets in the first data set are lost inside a first network;
some data packets in the first data set are lost inside the first communication device;
   and/or,
the condition that the first data set is lost entirely includes at least one of the following:
   the first data set is lost entirely inside the first network;
   the first data set is lost entirely inside the first communication device;
      and/or,
   the condition that header data in the first data set is lost includes at least one of the following:
      header data in the first data set is lost inside the first network;
      header data in the first data set is lost inside the first communication device.

Optionally, determining that the first data set is not a failed data set and/or skipping incorporating the first data set into the data set failure rate statistics includes:
in a case that the first data set satisfies a second condition, determining that the first data set is not a failed data set, and/or skipping incorporating the first data set into the data set failure rate statistics,
where the second condition includes at least one of the following:
   the first data set is lost entirely;
   some data in the first data set is lost;
   a third indicator is obtained, where the third indicator is used for indicating one of the following: some data packets in the first data set are lost, the first data set is lost entirely, some data packets in the first data set are lost outside the first network, some data packets in the first data set are lost outside the first communication device, the first data set is lost entirely outside the first network, and the first data set is lost entirely outside the first communication device;
   first information is obtained, where the first information includes at least one of the following: information of data packets in the first data set lost outside the first network, and information of data sets lost outside the first network;
      and/or,
   the second condition includes at least one of the following:
      header data in the first data set is lost;
      a fourth indicator is obtained, where the fourth indicator is used for indicating one of the following: header data in the first data set is lost, header data in the first data set is lost outside the first network, and header data in the first data set is lost outside the first communication device;
      second information is obtained, where the second information includes: information of header data packets in the first data set lost outside the first network.

Optionally,
the condition that some data packets in the first data set are lost includes at least one of the following:
some data packets in the first data set are lost outside the first network;
some data packets in the first data set are lost outside the first communication device;
   and/or,
the condition that the first data set is lost entirely includes at least one of the following:
   the first data set is lost entirely outside the first network;
   the first data set is lost entirely outside the first communication device;
      and/or,
   the condition that header data in the first data set is lost includes at least one of the following:
      header data in the first data set is lost outside the first network;
      header data in the first data set is lost outside the first communication device.

Optionally, determining that the first data set is successful or skipping incorporating the first data set into the data set failure rate statistics includes:
in a case that a third condition is satisfied, determining that the first data set is successful, or skipping incorporating the first data set into the data set failure rate statistics,
where the third condition includes at least one of the following:
   all data packets in the first data set are delivered successfully;
   some data packets in the first data set are delivered successfully, and/or some data packets fail;
   all data packets in the first data set do not require to be completely processed;
   a first indicator is not obtained, where the first indicator is used for indicating at least one of the following: all data packets in the first data set require to be completely processed;
      and/or,
   the third condition includes at least one of the following:
      all header data packets in the first data set are delivered successfully;
      some header data packets in the first data set are delivered successfully, and/or some header data packets fail;
      header data packets in the first data set do not require to be completely processed;
      all data packets in the first data set do not require to be completely processed;
      a first indicator is not obtained, where the first indicator is used for indicating at least one of the following: all data packets in the first data set require to be completely processed;
      a second indicator is not obtained, where the second indicator is used for indicating at least one of the following: all header data packets in the first data set require to be completely processed, and information about the range of header data packets requires to be completely processed;
         and/or,
      the third condition includes at least one of the following:
         all header data packets in the first data set are delivered successfully, and/or some or all data packets other than header data in the first data set fail;
         all header data packets in the first data set require to be completely processed;
         a second indicator is obtained, where the second indicator is used for indicating at least one of the following: all header data packets in the first data set require to be completely processed, and information about the range of header data packets requires to be completely processed;
            and/or,
         the third condition includes at least one of the following:
            data packets other than tail data packets in the first data set are delivered successfully, and/or some or all tail data packets in the first data set fail;
            tail data in the first data set allows to be lost;
            all data other than tail data in the first data set requires to be completely processed;
            a fifth indicator is obtained, where the fifth indicator is used for indicating at least one of the following: tail data in the first data set allows to be lost, and information about the range of tail data packets allows to be lost.

Optionally,
in a case that some data in the first data set is lost, all data packets in the first data set are: all data packets other than the lost data packets in the first data set;
   and/or,
in a case that some data of header data in the first data set is lost, all header data packets in the first data set are: all header data packets other than the lost data packets in the first data set;
   and/or,
the condition that data packets are failed includes at least one of the following: data packets fail to be transmitted, and timeout of data packets occurs.

Optionally,
determining whether some data packets in the first data set are lost includes at least one of the following:
determining, by the first communication device according to data information carried in received data packets, whether some data in the first data set is lost;
   and/or,
determining whether the first data set is lost entirely includes at least one of the following:
determining, by the first communication device according to sequence numbers of data sets carried in received data packets, whether the first data set is lost entirely.

Optionally, the data information includes at least one of the following: packet sequence numbers of data packets in the first data set, a start tag of the first data set, an end tag of the first data set, and the number of data packets in the first data set.

Optionally, in a case that the first communication device is a terminal, the first operation further includes:
sending, to a RAN element and/or a CN element, at least one of the following: a data set failure rate, a data set success rate, sequence numbers of successful data sets, the number of successful data sets, sequence numbers of failed data sets, and the number of failed data sets.

Optionally, determining that the denominator of a data set failure rate does not include the first data set includes:
in a case that a fourth condition is satisfied, determining that the denominator of the data set failure rate does not include the first data set,
where the fourth condition includes at least one of the following:
   the first data set is lost entirely;
   the first data set is lost entirely outside the first network.

Optionally, skipping incorporating the first data set into the data set failure rate statistics includes at least one of the following: the denominator of the data set failure rate does not include the first data set, and the numerator of the data set failure rate does not include the first data set.

Optionally, the apparatus further includes:
a first obtaining unit, configured to obtain third information, where the third information includes at least one of the following: the data set failure rate requirement, range information of data sets corresponding to the data set failure rate requirement, the first indicator, the second indicator, and the fifth indicator;
execute one or more of the operations in the first operation according to the third information,
where the first indicator is used for indicating at least one of the following: all data packets in the first data set require to be completely processed;
the second indicator is used for indicating at least one of the following: all header data packets in the first data set require to be completely processed, and information about the range of header data packets requires to be completely processed; and
the fifth indicator is used for indicating at least one of the following: tail data in the first data set allows to be lost, and information about the range of tail data packets allows to be lost.

Optionally, the granularity of the data set failure rate includes at least one of the following:
a data set failure rate of the terminal;
a data set failure rate in a tunnel;
a data set failure rate of a data set category;
a data set failure rate of one or more data set categories in the tunnel;
   and/or,
the granularity of the data set failure rate requirement includes at least one of the following:
   a data set failure rate requirement of the terminal;
   a data set failure rate requirement in the tunnel;
   a data set failure rate requirement of the data set category;
   a data set failure rate requirement of one or more data set categories in the tunnel.

In this embodiment of the present invention, a first operation is executed, where the first operation includes at least one of the following: determining that a first data set is failed, or determining that the first data set is successful, or determining that the first data set is not a failed data set; determining that the first data set is completely sent or incompletely sent; determining that the first data set is completely received or incompletely received; incorporating a failure of the first data set into data set failure rate statistics; skipping incorporating the first data set into the data set failure rate statistics; and determining that the denominator of a data set failure rate does not include the first data set. Therefore, a first communication device considers the transmission situation of various data sets, realizes the determination of the success of the data sets and/or how to determine the failure of the data sets, and thus can realize accurate statistics of a data set failure rate.

The communication device in this embodiment of this application may be an electronic device such as an electronic device having an operating system, or may be a component in an electronic device such as an integrated circuit or a chip. The electronic device may be either a terminal or another device other than the terminal. Exemplarily, the terminal may include, but is not limited to, the type of the terminal 11 listed above, and the another device may be a server, a network attached storage (Network Attached Storage, NAS), or the like. This embodiment of this application is not specifically limited thereto.

The communication device provided by this embodiment of this application can implement various processes implemented by the method embodiments shown in FIG. 2 and achieve the same technical effect. To avoid repetition, details are not described here again.

FIG. 8 is a second schematic structural diagram of a communication device according to embodiments of this application. As shown in FIG. 8, the communication device is a second communication device. The communication device 900 includes:
a second execution unit 910, configured to execute a second operation, where the second operation includes at least one of the following:
determining a data set failure rate requirement;
determining a first indicator;
determining a second indicator;
determining a fifth indicator; and
sending third information, where the third information includes at least one of the following: the data set failure rate requirement, range information of data sets corresponding to the data set failure rate requirement, the first indicator, the second indicator, and the fifth indicator;
the first indicator is used for indicating at least one of the following: all data packets in a first data set require to be completely processed;
the second indicator is used for indicating at least one of the following: all header data packets in the first data set require to be completely processed, and information about the range of header data packets requires to be completely processed; and
the fifth indicator is used for indicating at least one of the following: tail data in the first data set allows to be lost, and information about the range of tail data packets allows to be lost.

Optionally, sending the data set failure rate requirement includes at least one of the following:
sending through terminal-level signaling or cells;
sending through tunnel-level signaling or cells; and
sending through data set category or QoS subflow-level signaling or cells.

Optionally, a data set failure contained in the data set failure rate requirement includes at least one of the following: a data set satisfying a fifth condition, where
the fifth condition includes at least one of the following:
some data packets in the data set fail to be transmitted;
timeout of some data packets in the data set occurs (for example, exceeding a delay budget of the data set);
all data packets in the data set require to be completely processed;
   and/or,
the fifth condition includes at least one of the following:
   the data set is lost entirely;
   some data packets in the data set are lost;
   some data packets in the data set fail to be transmitted;
   timeout of some data packets in the data set occurs (for example, exceeding a delay budget of the data set);
   all data packets in the data set require to be completely processed;
      and/or,
   the fifth condition includes at least one of the following:
      some or all header data packets in the data set fail to be transmitted;
      timeout of some or all header data packets in the data set occurs;
      all header data packets in the data set require to be completely processed;
         and/or,
      the fifth condition includes at least one of the following:
         some or all header data packets in the data set are lost;
         some or all header data packets in the data set fail to be transmitted;
         timeout of some or all header data packets in the data set occurs;
         all header data packets in the data set require to be completely processed;
            and/or,
         the fifth condition includes at least one of the following:
            all data in the data set fails to be transmitted;
            timeout of all data in the data set occurs.

Optionally, determining a data set failure rate requirement includes:
obtaining a data unit level failure rate requirement of a data flow, and determining the data set failure rate requirement according to the data unit level failure rate requirement,
where the data set is a data set mapped by a data unit in a first network; and
the data unit includes one or more data packets.

Optionally, determining a fifth indicator includes:
obtaining a sixth indicator of a data unit level of a data flow, and determining the fifth indicator according to the sixth indicator,
where
the data set is a data set mapped by the data unit.

The communication device provided by this embodiment of this application can implement various processes implemented by the method embodiments shown in FIG. 3 and achieve the same technical effect. To avoid repetition, details are not described here again.

FIG. 9 is a third schematic structural diagram of a communication device according to embodiments of this application. The communication device is a third communication device. As shown in FIG. 9, the communication device 1000 includes:
a third execution unit, configured to execute a third operation, where the third operation includes at least one of the following:
determining fourth information, where the fourth information includes at least one of the following: a third indicator, first information, a fourth indicator, and second information; and
sending the fourth information,
where
the third indicator is used for indicating one of the following: some data packets in a first data set are lost, the first data set is lost entirely, some data packets in the first data set are lost outside a first network, some data packets in the first data set are lost outside a first communication device, the first data set is lost entirely outside the first network, and the first data set is lost entirely outside the first communication device;
the first information includes at least one of the following: information of data packets in the first data set lost outside the first network, and information of data sets lost outside the first network;
the fourth indicator is used for indicating one of the following: header data in the first data set is lost, header data in the first data set is lost outside the first network, and header data in the first data set is lost outside the first communication device; and
the second information includes: information of header data packets in the first data set lost outside the first network.

Optionally, determining fourth information includes:
in a case that a sixth condition is satisfied, determining the third indicator and/or the first information, where the sixth condition includes at least one of the following: the third communication device finds that some data packets of a first data unit are lost; and the third communication device finds that some data units of a first data unit category are lost entirely;
in a case that a seventh condition is satisfied, determining the fourth indicator and/or the second information, where the seventh condition includes at least one of the following: the third communication device finds that header data packets of the first data unit are lost,
where
the first data unit is a data unit in a data flow mapping the first data set;
the first data unit category is a data unit category in the data flow mapping the first data set; and
the first data unit includes one or more data packets.

The communication device provided by this embodiment of this application can implement various processes implemented by the method embodiments shown in FIG. 4 and achieve the same technical effect. To avoid repetition, details are not described here again.

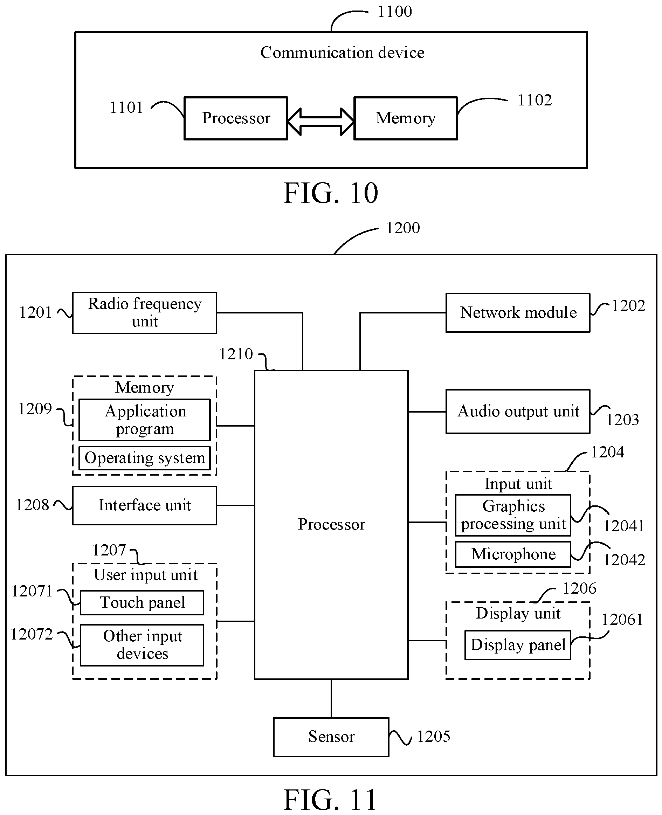

Optionally, as shown in FIG. 10, embodiments of this application further provide a communication device 1100, including a processor 1101 and a memory 1102. The memory 1102 stores programs or instructions executable on the processor 1101. For example, when the communication device 1100 is a first communication device, the programs or instructions, when executed by the processor 1101, implement various steps of the data processing method embodiments and can achieve the same technical effect. When the communication device 1100 is a second communication device, the programs or instructions, when executed by the processor 1101, implement various steps of the data processing method embodiments and can achieve the same technical effect. When the communication device 1100 is a third communication device, the programs or instructions, when executed by the processor 1101, implement various steps of the data processing method embodiments and can achieve the same technical effect. To avoid repetition, details are not described here again.

Embodiments of this application further provide a terminal, including a processor and a communication interface. The processor is configured to execute a first operation, where the first operation includes at least one of the following: determining that a first data set is failed, or determining that the first data set is successful, or determining that the first data set is not a failed data set; determining that the first data set is completely sent or incompletely sent; determining that the first data set is completely received or incompletely received; incorporating a failure of the first data set into data set failure rate statistics; skipping incorporating the first data set into the data set failure rate statistics; and determining that the denominator of a data set failure rate does not include the first data set. The terminal embodiments correspond to the method embodiments at the terminal side. Various implementation processes and implementations of the method embodiments are applicable to the terminal embodiments and can achieve the same technical effect. Specifically, FIG. 11 is a schematic diagram of a hardware structure of a terminal implementing embodiments of this application.

The terminal 1200 includes, but is not limited to: at least some components of a radio frequency unit 1201, a network module 1202, an audio output unit 1203, an input unit 1204, a sensor 1205, a display unit 1206, a user input unit 1207, an interface unit 1208, a memory 1209, a processor 1210, and the like.

It will be appreciated by those skilled in the art that the terminal 1200 may further include a power supply (for example, a battery) for supplying power to the components. The power supply may be logically connected to the processor 1210 by a power management system, thereby implementing functions such as charging, discharging, and power consumption management by using the power management system. The terminal structure shown in FIG. 11 does not constitute a limitation on the terminal, and the terminal may include more or fewer components than shown, or combine some components, or have different component arrangements. Details are not described here again.

It will be appreciated that in this embodiment of this application, the input unit 1204 may include a graphics processing unit (Graphics Processing Unit, GPU) 12041 and a microphone 12042. The graphics processing unit 12041 performs processing on image data of a static picture or a video that is obtained by an image acquisition apparatus (for example, a camera) in a video acquisition mode or an image acquisition mode. The display unit 1206 may include a display panel 12061. The display panel 12061 may be configured by using a liquid crystal display, an organic light-emitting diode, or the like. The user input unit 1207 includes at least one of a touch panel 12071 and another input device 12072. The touch panel 12071 is also referred to as a touch screen. The touch panel 12071 may include two parts: a touch detection apparatus and a touch controller. The another input device 12072 may include, but is not limited to, a physical keyboard, a functional key (for example, a volume control key or a switch key), a track ball, a mouse, and a joystick. Details are not described here again.

In this embodiment of this application, the radio frequency unit 1201 receives downlink data from a network-side device and may then transmit the downlink data to the processor 1210 for processing. In addition, the radio frequency unit 1201 may send uplink data to the network side device. Generally, the radio frequency unit 1201 includes, but is not limited to, an antenna, an amplifier, a transceiver, a coupler, a low noise amplifier, a duplexer, and the like.

The memory 1209 may be configured to store software programs or instructions and various data. The memory 1209 may mainly include a first storage area for storing programs or instructions and a second storage area for storing data. The first storage area may store an operating system, an application program or instruction required by at least one function (for example, a sound playback function and an image display function), and the like. Furthermore, the memory 1209 may include a volatile memory or a non-volatile memory, or the memory 1209 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The non-volatile memory may be a random access memory (Random Access Memory, RAM), a static random access memory (Static RAM, SRAM) a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 1209 in this embodiment of this application includes, but is not limited to, these memories and any other suitable types of memories.

The processor 1210 may include one or more processing units. Optionally, the processor 1210 integrates an application processor and a modem processor, where the application processor mainly processes operations involving an operating system, a user interface, an application program, and the like, and the modem processor mainly processes wireless communication signals, for example, a baseband processor. It will be appreciated that the modem processor may also not be integrated into the processor 1210.

The processor 1210 is configured to execute a first operation, where the first operation includes at least one of the following: determining that a first data set is failed, or determining that the first data set is successful, or determining that the first data set is not a failed data set; determining that the first data set is completely sent or incompletely sent; determining that the first data set is completely received or incompletely received; incorporating a failure of the first data set into data set failure rate statistics; skipping incorporating the first data set into the data set failure rate statistics; and determining that the denominator of a data set failure rate does not include the first data set.

In this embodiment of the present invention, a first operation is executed, where the first operation includes at least one of the following: determining that a first data set is failed, or determining that the first data set is successful, or determining that the first data set is not a failed data set; determining that the first data set is completely sent or incompletely sent; determining that the first data set is completely received or incompletely received; incorporating a failure of the first data set into data set failure rate statistics; skipping incorporating the first data set into the data set failure rate statistics; and determining that the denominator of a data set failure rate does not include the first data set. Therefore, a first communication device considers the transmission situation of various data sets, realizes the determination of the success of the data sets and/or how to determine the failure of the data sets, and thus can realize accurate statistics of a data set failure rate.

Optionally, in a case of determining that the first data set is failed, the first operation further includes at least one of the following:
determining that a second data set is failed, where the second data set is a data set dependent on the first data set; and
incorporating a failure of the second data set into the data set failure rate statistics.

Optionally, determining that a first data set is failed includes:
in a case that the first data set satisfies a first condition, determining that the first data set is failed, where
the first condition includes at least one of the following:
   some data packets in the first data set fail to be transmitted;
   timeout of some data packets in the first data set occurs;
   all data packets in the first data set require to be completely processed;
   a first indicator is obtained, where the first indicator is used for indicating at least one of the following: all data packets in the first data set require to be completely processed;
      and/or,
   the first condition includes at least one of the following:
      the first data set is lost entirely;
      some data packets in the first data set are lost;
      some data packets in the first data set fail to be transmitted;
      timeout of some data packets in the first data set occurs;
      all data packets in the first data set require to be completely processed;
      a first indicator is obtained, where the first indicator is used for indicating at least one of the following: all data packets in the first data set require to be completely processed;
         and/or,
      the first condition includes at least one of the following:
         some or all header data packets in the first data set fail to be transmitted;
         timeout of some or all header data packets in the first data set occurs;
         all header data packets in the first data set require to be completely processed;
         a second indicator is obtained, where the second indicator is used for indicating at least one of the following: all header data packets in the first data set require to be completely processed, and information about the range of header data packets requires to be completely processed;
            and/or,
         the first condition includes at least one of the following:
            some or all header data packets in the first data set are lost;
            some or all header data packets in the first data set fail to be transmitted;
            timeout of some or all header data packets in the first data set occurs;
            all header data packets in the first data set require to be completely processed;
            a second indicator is obtained, where the second indicator is used for indicating at least one of the following: all header data packets in the first data set require to be completely processed, and information about the range of header data packets requires to be completely processed.

Optionally, the condition that some data packets in the first data set are lost includes at least one of the following:
some data packets in the first data set are lost inside a first network;
some data packets in the first data set are lost inside a first communication device;
   and/or,
the condition that the first data set is lost entirely includes at least one of the following:
   the first data set is lost entirely inside the first network;
   the first data set is lost entirely inside the first communication device;
      and/or,
   the condition that header data in the first data set is lost includes at least one of the following:
      header data in the first data set is lost inside the first network;
      header data in the first data set is lost inside the first communication device.

Optionally, determining that the first data set is not a failed data set and/or skipping incorporating the first data set into the data set failure rate statistics includes:
in a case that the first data set satisfies a second condition, determining that the first data set is not a failed data set, and/or skipping incorporating the first data set into the data set failure rate statistics,
where the second condition includes at least one of the following:
   the first data set is lost entirely;
   some data in the first data set is lost;
   a third indicator is obtained, where the third indicator is used for indicating one of the following: some data packets in the first data set are lost, the first data set is lost entirely, some data packets in the first data set are lost outside the first network, some data packets in the first data set are lost outside the first communication device, the first data set is lost entirely outside the first network, and the first data set is lost entirely outside the first communication device;
   first information is obtained, where the first information includes at least one of the following: information of data packets in the first data set lost outside the first network, and information of data sets lost outside the first network;
      and/or,
   the second condition includes at least one of the following:
      header data in the first data set is lost;
      a fourth indicator is obtained, where the fourth indicator is used for indicating one of the following: header data in the first data set is lost, header data in the first data set is lost outside the first network, and header data in the first data set is lost outside the first communication device;
      second information is obtained, where the second information includes: information of header data packets in the first data set lost outside the first network.

Optionally,
the condition that some data packets in the first data set are lost includes at least one of the following:
some data packets in the first data set are lost outside the first network;
some data packets in the first data set are lost outside the first communication device;
   and/or,
the condition that the first data set is lost entirely includes at least one of the following:
   the first data set is lost entirely outside the first network;
   the first data set is lost entirely outside the first communication device;
      and/or,
   the condition that header data in the first data set is lost includes at least one of the following:
      header data in the first data set is lost outside the first network;
      header data in the first data set is lost outside the first communication device.

Optionally, determining that the first data set is successful or skipping incorporating the first data set into the data set failure rate statistics includes:
in a case that a third condition is satisfied, determining that the first data set is successful, or skipping incorporating the first data set into the data set failure rate statistics,
where the third condition includes at least one of the following:
   all data packets in the first data set are delivered successfully;
   some data packets in the first data set are delivered successfully, and/or some data packets fail;
   all data packets in the first data set do not require to be completely processed;
   a first indicator is not obtained, where the first indicator is used for indicating at least one of the following: all data packets in the first data set require to be completely processed;
      and/or,
   the third condition includes at least one of the following:
      all header data packets in the first data set are delivered successfully;
      some header data packets in the first data set are delivered successfully, and/or some header data packets fail;
      header data packets in the first data set do not require to be completely processed;
      all data packets in the first data set do not require to be completely processed;
      a first indicator is not obtained, where the first indicator is used for indicating at least one of the following: all data packets in the first data set require to be completely processed;
      a second indicator is not obtained, where the second indicator is used for indicating at least one of the following: all header data packets in the first data set require to be completely processed, and information about the range of header data packets requires to be completely processed;
         and/or,
      the third condition includes at least one of the following:
         all header data packets in the first data set are delivered successfully, and/or some or all data packets other than header data in the first data set fail;
         all header data packets in the first data set require to be completely processed;
         a second indicator is obtained, where the second indicator is used for indicating at least one of the following: all header data packets in the first data set require to be completely processed, and information about the range of header data packets requires to be completely processed;
            and/or,
         the third condition includes at least one of the following:
            data packets other than tail data packets in the first data set are delivered successfully, and/or some or all tail data packets in the first data set fail;
            tail data in the first data set allows to be lost;
            all data other than tail data in the first data set requires to be completely processed;
            a fifth indicator is obtained, where the fifth indicator is used for indicating at least one of the following: tail data in the first data set allows to be lost, and information about the range of tail data packets allows to be lost.

Optionally,
in a case that some data in the first data set is lost, all data packets in the first data set are: all data packets other than the lost data packets in the first data set;
   and/or,
in a case that some data of header data in the first data set is lost, all header data packets in the first data set are: all header data packets other than the lost data packets in the first data set;
   and/or,
the condition that data packets are failed includes at least one of the following: data packets fail to be transmitted, and timeout of data packets occurs.

Optionally,
determining whether some data packets in the first data set are lost includes at least one of the following:
determining, by the first communication device according to data information carried in received data packets, whether some data in the first data set is lost;
   and/or,
determining whether the first data set is lost entirely includes at least one of the following:
   determining, by the first communication device according to sequence numbers of data sets carried in received data packets, whether the first data set is lost entirely.

Optionally, the data information includes at least one of the following: packet sequence numbers of data packets in the first data set, a start tag of the first data set, an end tag of the first data set, and the number of data packets in the first data set.

Optionally, in a case that the first communication device is a terminal, the first operation further includes:
sending, to a RAN element and/or a CN element, at least one of the following: a data set failure rate, a data set success rate, sequence numbers of successful data sets, the number of successful data sets, sequence numbers of failed data sets, and the number of failed data sets.

Optionally, determining that the denominator of a data set failure rate does not include the first data set includes:
in a case that a fourth condition is satisfied, determining that the denominator of the data set failure rate does not include the first data set,
where the fourth condition includes at least one of the following:
   the first data set is lost entirely;
   the first data set is lost entirely outside the first network.

Optionally, skipping incorporating the first data set into the data set failure rate statistics includes at least one of the following: the denominator of the data set failure rate does not include the first data set, and the numerator of the data set failure rate does not include the first data set.

Optionally, the processor 1210 is further configured to:
obtain third information, where the third information includes at least one of the following: the data set failure rate requirement, range information of data sets corresponding to the data set failure rate requirement, the first indicator, the second indicator, and the fifth indicator; and
execute one or more of the operations in the first operation according to the third information,
where the first indicator is used for indicating at least one of the following: all data packets in the first data set require to be completely processed;
the second indicator is used for indicating at least one of the following: all header data packets in the first data set require to be completely processed, and information about the range of header data packets requires to be completely processed; and
the fifth indicator is used for indicating at least one of the following: tail data in the first data set allows to be lost, and information about the range of tail data packets allows to be lost.

Optionally, the granularity of the data set failure rate includes at least one of the following:
a data set failure rate of the terminal;
a data set failure rate in a tunnel;
a data set failure rate of a data set category;
a data set failure rate of one or more data set categories in the tunnel;
   and/or,
the granularity of the data set failure rate requirement includes at least one of the following:
   a data set failure rate requirement of the terminal;
   a data set failure rate requirement in the tunnel;
   a data set failure rate requirement of the data set category;
   a data set failure rate requirement of one or more data set categories in the tunnel.

Embodiments of this application further provide a network side device, including a processor and a communication interface. The processor is configured to execute a first operation, where the first operation includes at least one of the following: determining that a first data set is failed, or determining that the first data set is successful, or determining that the first data set is not a failed data set; determining that the first data set is completely sent or incompletely sent; determining that the first data set is completely received or incompletely received; incorporating a failure of the first data set into data set failure rate statistics; skipping incorporating the first data set into the data set failure rate statistics; and determining that the denominator of a data set failure rate does not include the first data set.

Alternatively, the processor is configured to execute a second operation, where the second operation includes at least one of the following: determining a data set failure rate requirement; determining a first indicator; determining a second indicator; determining a fifth indicator; and sending third information, where the third information includes at least one of the following: the data set failure rate requirement, range information of data sets corresponding to the data set failure rate requirement, the first indicator, the second indicator, and the fifth indicator; and the first indicator is used for indicating at least one of the following: all data packets in the first data set require to be completely processed; the second indicator is used for indicating at least one of the following: all header data packets in the first data set require to be completely processed, and information about the range of header data packets requires to be completely processed; and the fifth indicator is used for indicating at least one of the following: tail data in the first data set allows to be lost, and information about the range of tail data packets allows to be lost.

Alternatively, the processor is configured to execute a third operation, where the third operation includes at least one of the following: determining fourth information, where the fourth information includes at least one of the following: a third indicator, first information, a fourth indicator, and second information; and sending the fourth information, where the third indicator is used for indicating one of the following: some data packets in the first data set are lost, the first data set is lost entirely, some data packets in the first data set are lost outside the first network, some data packets in the first data set are lost outside the first communication device, the first data set is lost entirely outside the first network, and the first data set is lost entirely outside the first communication device; the first information includes at least one of the following: information of data packets in the first data set lost outside the first network, and information of data sets lost outside the first network; the fourth indicator is used for indicating one of the following: header data in the first data set is lost, header data in the first data set is lost outside the first network, and header data in the first data set is lost outside the first communication device; and the second information includes: information of header data packets in the first data set lost outside the first network.

The network side device embodiments correspond to the method embodiments at the network side device. Various implementation processes and implementations of the method embodiments are applicable to the network side device embodiments and can achieve the same technical effect.

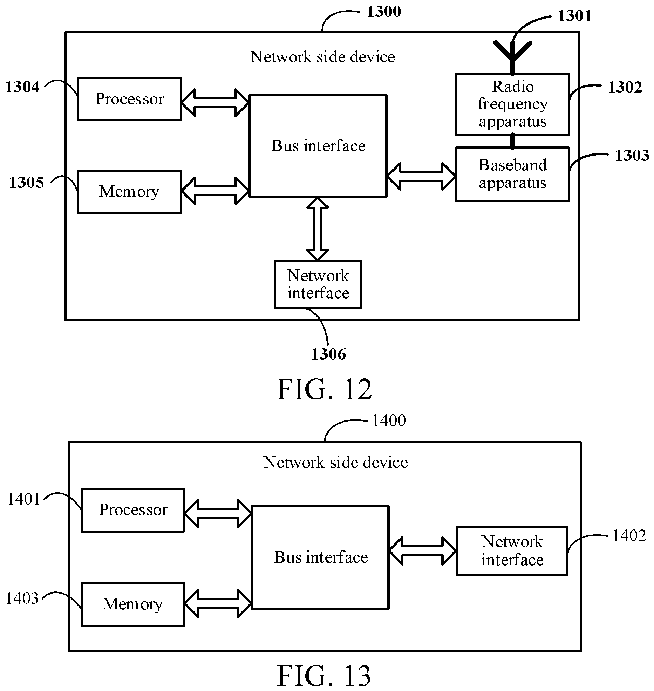

Specifically, embodiments of this application further provide a network side device. As shown in FIG. 12, the network side device 1300 includes: an antenna 1301, a radio frequency apparatus 1302, a baseband apparatus 1303, a processor 1304, and a memory 1305. The antenna 1301 is connected to the radio frequency apparatus 1302. In an uplink direction, the radio frequency apparatus 1302 receives information through the antenna 1301 and sends the received information to the baseband apparatus 1303 for processing. In a downlink direction, the baseband apparatus 1303 processes information to be sent and sends the information to the radio frequency apparatus 1302. The received information is processed by the radio frequency apparatus 1302 and is then sent through the antenna 1301.

The method performed by the network side device in the above embodiments may be implemented in the baseband apparatus 1303. The baseband apparatus 1303 includes a baseband processor.

The baseband apparatus 1303 may, for example, include at least one baseband board. The baseband board is provided with a plurality of chips. As shown in FIG. 12, one of the chips is, for example, the baseband processor, connected to the memory 1305 through a bus interface to call programs in the memory 1305 to perform a network device operation shown in the above method embodiments.

The network side device may further include a network interface 1306. The interface is, for example, a common public radio interface (common public radio interface, CPRI).

Specifically, the network side device 1300 in this embodiment of the present invention further includes: instructions or programs stored in the memory 1305 and executable on the processor 1304. The processor 1304 calls the instructions or programs in the memory 1305 to execute the method executed by each unit and module in FIG. 7, and achieves the same technical effect. To avoid repetition, details are not described here again.

Specifically, embodiments of this application further provide a network side device. As shown in FIG. 13, the network side device 1400 includes: a processor 1401, a network interface 1402, and a memory 1403. The network interface 1402 is, for example, a common public radio interface (common public radio interface, CPRI).

Specifically, the network side device 1400 in this embodiment of the present invention further includes: instructions or programs stored in the memory 1403 and executable on the processor 1401. The processor 1401 calls the instructions or programs in the memory 1403 to execute the method executed by each unit and module in FIG. 8 or FIG. 9, and achieves the same technical effect. To avoid repetition, details are not described here again.

Embodiments of this application further provide a readable storage medium. The readable storage medium stores programs or instructions. The programs or instructions, when executed by a processor, implement various processes of the embodiments of the data processing method, and can achieve the same technical effect. To avoid repetition, details are not described here again.

The processor is a processor in the terminal in the above embodiments. The readable storage medium includes a computer-readable storage medium such as a computer read-only memory (ROM), a random access memory (RAM), a magnetic disk, or an optical disc.

Embodiments of this application additionally provide a chip. The chip includes a processor and a communication interface. The communication interface is coupled to the processor. The processor is configured to execute programs or instructions, to implement various processes of the embodiments of the data processing method, and can achieve the same technical effect. To avoid repetition, details are not described here again.

It will be appreciated that the chip mentioned in this embodiment of this application may also be referred to as a system on chip, a system chip, a system on a chip or a system-on-a-chip, etc.

Embodiments of this application additionally provide a computer program/program product. The computer program/program product is stored in a storage medium. The computer program/program product, when executed by at least one processor, implements each process of the data processing method embodiment and can achieve the same technical effect. To avoid repetition, details are not described here again.

Embodiments of this application further provide a communication system, including: a terminal and a network side device, where the terminal may be configured to execute the steps of the data processing method as described above, and the network side device may be configured to execute the steps of the data processing method as described above.

Embodiments of this application further provide a communication system, including: a first communication device, a second communication device and a third communication device, where the first communication device may be configured to execute the steps of the data processing method as described above, the second communication device may be configured to execute the steps of the data processing method as described above, and the third communication device may be configured to execute the steps of the data processing method as described above.

It is to be noted that the terms "include", "comprise", or any other variations thereof in this specification are intended to cover a non-exclusive inclusion, such that a process, method, article, or apparatus including a series of elements not only includes those elements, but also includes other elements that are not explicitly listed, or also includes elements inherent to such process, method, article, or apparatus. Without more limitations, elements defined by the sentence "including one" does not exclude that there are still other same elements in the processes, methods, objects, or apparatuses. Furthermore, it is to be pointed out that the scopes of the method and apparatus in the implementations of this application are not limited to executing functions according to the illustrated or discussed sequence, but may also include execute functions in a basically simultaneous way or in a reverse sequence based on the functions involved. For example, the described method may be executed according to a sequence different from the described sequence, and steps may further be added, omitted or combined. In addition, features described with reference to some examples may be combined in other examples.

According to the descriptions in the above implementations, a person skilled in the art may clearly learn that the method according to the above embodiments may be implemented by software plus a necessary hardware platform. Of course, it may also be implemented by hardware, but in many cases the former is better implementation. Based on such an understanding, the technical solutions of this application essentially, or the part contributing to the prior art, may be embodied in a form of a computer software product. The computer software product is stored in a storage medium (for example, a ROM/RAM, a magnetic disk, or an optical disc) including several instructions to enable a terminal (which may be a mobile phone, a computer, a server, an air conditioner, a network device, or the like) to perform the method described in each embodiment of this application.

Embodiments of this application have been described above with reference to the accompanying drawings. This application is, however, not limited to the specific implementations described above, and the specific implementations are merely exemplary rather than restrictive. A person of ordinary skill in the art may make various variations under the teaching of the this application without departing from the spirit of this application and the protection scope of the claims, and such variations shall all fall within the protection scope of this application.

## Claims

1. A data processing method, comprising:
executing, by a first communication device, a first operation, wherein the first operation comprises at least one of the following:
determining that a first data set is failed, or determining that the first data set is successful, or determining that the first data set is not a failed data set;
determining that the first data set is completely sent or incompletely sent;
determining that the first data set is completely received or incompletely received;
incorporating a failure of the first data set into data set failure rate statistics;
skipping incorporating the first data set into the data set failure rate statistics; and
determining that the denominator of a data set failure rate does not comprise the first data set.

2. The method according to claim 1, wherein in a case of determining that the first data set is failed, the first operation further comprises at least one of the following:
determining that a second data set is failed, wherein the second data set is a data set dependent on the first data set; and
incorporating a failure of the second data set into the data set failure rate statistics.

3. The method according to claim 1 or 2, wherein determining that a first data set is failed comprises:
in a case that the first data set satisfies a first condition, determining that the first data set is failed, wherein
the first condition comprises at least one of the following:
some data packets in the first data set fail to be transmitted;
timeout of some data packets in the first data set occurs;
all data packets in the first data set require to be completely processed;
a first indicator is obtained, wherein the first indicator is used for indicating at least one of the following: all data packets in the first data set require to be completely processed;
and/or,
the first condition comprises at least one of the following:
the first data set is lost entirely;
some data packets in the first data set are lost;
some data packets in the first data set fail to be transmitted;
timeout of some data packets in the first data set occurs;
all data packets in the first data set require to be completely processed;
a first indicator is obtained, wherein the first indicator is used for indicating at least one of the following: all data packets in the first data set require to be completely processed;
and/or,
the first condition comprises at least one of the following:
some or all header data packets in the first data set fail to be transmitted;
timeout of some or all header data packets in the first data set occurs;
all header data packets in the first data set require to be completely processed;
a second indicator is obtained, wherein the second indicator is used for indicating at least one of the following: all header data packets in the first data set require to be completely processed, and information about the range of header data packets requires to be completely processed;
and/or,
the first condition comprises at least one of the following:
some or all header data packets in the first data set are lost;
some or all header data packets in the first data set fail to be transmitted;
timeout of some or all header data packets in the first data set occurs;
all header data packets in the first data set require to be completely processed;
a second indicator is obtained, wherein the second indicator is used for indicating at least one of the following: all header data packets in the first data set require to be completely processed, and information about the range of header data packets requires to be completely processed.

4. The method according to claim 3, wherein the condition that some data packets in the first data set are lost comprises at least one of the following:
some data packets in the first data set are lost inside a first network;
some data packets in the first data set are lost inside the first communication device;
and/or,
the condition that the first data set is lost entirely comprises at least one of the following:
the first data set is lost entirely inside the first network;
the first data set is lost entirely inside the first communication device;
and/or,
the condition that header data in the first data set is lost comprises at least one of the following:
header data in the first data set is lost inside the first network;
header data in the first data set is lost inside the first communication device.

5. The method according to claim 1, wherein determining that the first data set is not a failed data set and/or skipping incorporating the first data set into the data set failure rate statistics comprises:
in a case that the first data set satisfies a second condition, determining that the first data set is not a failed data set, and/or skipping incorporating the first data set into the data set failure rate statistics,
wherein the second condition comprises at least one of the following:
the first data set is lost entirely;
some data in the first data set is lost;
a third indicator is obtained, wherein the third indicator is used for indicating one of the following: some data packets in the first data set are lost, the first data set is lost entirely, some data packets in the first data set are lost outside a first network, some data packets in the first data set are lost outside the first communication device, the first data set is lost entirely outside the first network, and the first data set is lost entirely outside the first communication device;
first information is obtained, wherein the first information comprises at least one of the following: information of data packets in the first data set lost outside the first network, and information of data sets lost outside the first network;
and/or,
the second condition comprises at least one of the following:
header data in the first data set is lost;
a fourth indicator is obtained, wherein the fourth indicator is used for indicating one of the following: header data in the first data set is lost, header data in the first data set is lost outside the first network, and header data in the first data set is lost outside the first communication device;
second information is obtained, wherein the second information comprises: information of header data packets in the first data set lost outside the first network.

6. The method according to claim 5, wherein
the condition that some data packets in the first data set are lost comprises at least one of the following:
some data packets in the first data set are lost outside the first network;
some data packets in the first data set are lost outside the first communication device;
and/or,
the condition that the first data set is lost entirely comprises at least one of the following:
the first data set is lost entirely outside the first network;
the first data set is lost entirely outside the first communication device;
and/or,
the condition that header data in the first data set is lost comprises at least one of the following:
header data in the first data set is lost outside the first network;
header data in the first data set is lost outside the first communication device.

7. The method according to claim 1, wherein determining that the first data set is successful or skipping incorporating the first data set into the data set failure rate statistics comprises:
in a case that a third condition is satisfied, determining that the first data set is successful, or skipping incorporating the first data set into the data set failure rate statistics,
wherein the third condition comprises at least one of the following:
all data packets in the first data set are delivered successfully;
some data packets in the first data set are delivered successfully, and/or some data packets fail;
all data packets in the first data set do not require to be completely processed;
a first indicator is not obtained, wherein the first indicator is used for indicating at least one of the following: all data packets in the first data set require to be completely processed;
and/or,
the third condition comprises at least one of the following:
all header data packets in the first data set are delivered successfully;
some header data packets in the first data set are delivered successfully, and/or some header data packets fail;
header data packets in the first data set do not require to be completely processed;
all data packets in the first data set do not require to be completely processed;
a first indicator is not obtained, wherein the first indicator is used for indicating at least one of the following: all data packets in the first data set require to be completely processed;
a second indicator is not obtained, wherein the second indicator is used for indicating at least one of the following: all header data packets in the first data set require to be completely processed, and information about the range of header data packets requires to be completely processed;
and/or,
the third condition comprises at least one of the following:
all header data packets in the first data set are delivered successfully, and/or some or all data packets other than header data in the first data set fail;
all header data packets in the first data set require to be completely processed;
a second indicator is obtained, wherein the second indicator is used for indicating at least one of the following: all header data packets in the first data set require to be completely processed, and information about the range of header data packets requires to be completely processed;
and/or,
the third condition comprises at least one of the following:
data packets other than tail data packets in the first data set are delivered successfully, and/or some or all tail data packets in the first data set fail;
tail data in the first data set allows to be lost;
all data other than tail data in the first data set requires to be completely processed;
a fifth indicator is obtained, wherein the fifth indicator is used for indicating at least one of the following: tail data in the first data set allows to be lost, and information about the range of tail data packets allows to be lost.

8. The method according to claim 7, wherein
in a case that some data in the first data set is lost, all data packets in the first data set are: all data packets other than the lost data packets in the first data set;
and/or,
in a case that some data of header data in the first data set is lost, all header data packets in the first data set are: all header data packets other than the lost data packets in the first data set;
and/or,
the condition that data packets are failed comprises at least one of the following: data packets fail to be transmitted, and timeout of data packets occurs.

9. The method according to any one of claims 3 to 8, wherein
determining whether some data packets in the first data set are lost comprises at least one of the following:
determining, by the first communication device according to data information carried in received data packets, whether some data in the first data set is lost;
and/or,
determining whether the first data set is lost entirely comprises at least one of the following:
determining, by the first communication device according to sequence numbers of data sets carried in received data packets, whether the first data set is lost entirely.

10. The method according to claim 9, wherein the data information comprises at least one of the following: packet sequence numbers of data packets in the first data set, a start tag of the first data set, an end tag of the first data set, and the number of data packets in the first data set.

11. The method according to claim 1, wherein in a case that the first communication device is a terminal, the first operation further comprises:
sending, to a RAN element and/or a CN element, at least one of the following: a data set failure rate, a data set success rate, sequence numbers of successful data sets, the number of successful data sets, sequence numbers of failed data sets, and the number of failed data sets.

12. The method according to claim 1, wherein determining that the denominator of a data set failure rate does not comprise the first data set comprises:
in a case that a fourth condition is satisfied, determining that the denominator of the data set failure rate does not comprise the first data set,
wherein the fourth condition comprises at least one of the following:
the first data set is lost entirely;
the first data set is lost entirely outside a first network.

13. The method according to claim 1, wherein skipping incorporating the first data set into the data set failure rate statistics comprises at least one of the following: the denominator of the data set failure rate does not comprise the first data set, and the numerator of the data set failure rate does not comprise the first data set.

14. The method according to claim 1, further comprising:
obtaining, by the first communication device, third information, wherein the third information comprises at least one of the following: a data set failure rate requirement, range information of data sets corresponding to the data set failure rate requirement, a first indicator, a second indicator, and a fifth indicator;
executing one or more of the operations in the first operation according to the third information,
wherein the first indicator is used for indicating at least one of the following: all data packets in the first data set require to be completely processed;
the second indicator is used for indicating at least one of the following: all header data packets in the first data set require to be completely processed, and information about the range of header data packets requires to be completely processed;
the fifth indicator is used for indicating at least one of the following: tail data in the first data set allows to be lost, and information about the range of tail data packets allows to be lost.

15. The method according to any one of claims 1 to 14, wherein the granularity of the data set failure rate comprises at least one of the following:
a data set failure rate of a terminal;
a data set failure rate in a tunnel;
a data set failure rate of a data set category;
a data set failure rate of one or more data set categories in the tunnel;
and/or,
the granularity of the data set failure rate requirement comprises at least one of the following:
a data set failure rate requirement of the terminal;
a data set failure rate requirement in the tunnel;
a data set failure rate requirement of the data set category;
a data set failure rate requirement of one or more data set categories in the tunnel.

16. A data processing method, comprising:
executing, by a second communication device, a second operation, wherein the second operation comprises at least one of the following:
determining a data set failure rate requirement;
determining a first indicator;
determining a second indicator;
determining a fifth indicator; and
sending third information, wherein the third information comprises at least one of the following: the data set failure rate requirement, range information of data sets corresponding to the data set failure rate requirement, the first indicator, the second indicator, and the fifth indicator;
the first indicator is used for indicating at least one of the following: all data packets in a first data set require to be completely processed;
the second indicator is used for indicating at least one of the following: all header data packets in the first data set require to be completely processed, and information about the range of header data packets requires to be completely processed; and
the fifth indicator is used for indicating at least one of the following: tail data in the first data set allows to be lost, and information about the range of tail data packets allows to be lost.

17. The method according to claim 16, wherein sending the data set failure rate requirement comprises at least one of the following:
sending through terminal-level signaling or cells;
sending through tunnel-level signaling or cells; and
sending through data set category or QoS subflow-level signaling or cells.

18. The method according to claim 16, wherein
a data set failure contained in the data set failure rate requirement comprises at least one of the following: a data set satisfying a fifth condition, wherein
the fifth condition comprises at least one of the following:
some data packets in the data set fail to be transmitted;
timeout of some data packets in the data set occurs (for example, exceeding a delay budget of the data set);
all data packets in the data set require to be completely processed;
and/or,
the fifth condition comprises at least one of the following:
the data set is lost entirely;
some data packets in the data set are lost;
some data packets in the data set fail to be transmitted;
timeout of some data packets in the data set occurs (for example, exceeding a delay budget of the data set);
all data packets in the data set require to be completely processed;
and/or,
the fifth condition comprises at least one of the following:
some or all header data packets in the data set fail to be transmitted;
timeout of some or all header data packets in the data set occurs;
all header data packets in the data set require to be completely processed;
and/or,
the fifth condition comprises at least one of the following:
some or all header data packets in the data set are lost;
some or all header data packets in the data set fail to be transmitted;
timeout of some or all header data packets in the data set occurs;
all header data packets in the data set require to be completely processed;
and/or,
the fifth condition comprises at least one of the following:
all data in the data set fails to be transmitted;
timeout of all data in the data set occurs.

19. The method according to claim 16, wherein determining a data set failure rate requirement comprises:
obtaining a data unit level failure rate requirement of a data flow, and determining the data set failure rate requirement according to the data unit level failure rate requirement,
wherein the data set is a data set mapped by a data unit in a first network; and
the data unit comprises one or more data packets.

20. The method according to claim 16, wherein determining a fifth indicator comprises:
obtaining a sixth indicator of a data unit level of a data flow, and determining the fifth indicator according to the sixth indicator,
wherein
the data set is a data set mapped by a data unit.

21. A data processing method, comprising:
executing, by a third communication device, a third operation, wherein the third operation comprises at least one of the following:
determining fourth information, wherein the fourth information comprises at least one of the following: a third indicator, first information, a fourth indicator, and second information; and
sending the fourth information,
wherein
the third indicator is used for indicating one of the following: some data packets in a first data set are lost, the first data set is lost entirely, some data packets in the first data set are lost outside a first network, some data packets in the first data set are lost outside a first communication device, the first data set is lost entirely outside the first network, and the first data set is lost entirely outside the first communication device;
the first information comprises at least one of the following: information of data packets in the first data set lost outside the first network, and information of data sets lost outside the first network;
the fourth indicator is used for indicating one of the following: header data in the first data set is lost, header data in the first data set is lost outside the first network, and header data in the first data set is lost outside the first communication device; and
the second information comprises: information of header data packets in the first data set lost outside the first network.

22. The method according to claim 21, wherein determining fourth information comprises:
in a case that a sixth condition is satisfied, determining the third indicator and/or the first information, wherein
the sixth condition comprises at least one of the following:
the third communication device finds that some data packets of a first data unit are lost;
the third communication device finds that some data units of a first data unit category are lost entirely;
and/or,
in a case that a seventh condition is satisfied, determining the fourth indicator and/or the second information, wherein
the seventh condition comprises at least one of the following:
the third communication device finds that header data packets of the first data unit are lost,
wherein
the first data unit is a data unit in a data flow mapping the first data set;
the first data unit category is a data unit category in the data flow mapping the first data set;
the first data unit comprises one or more data packets.

23. A communication device, wherein the communication device is a first communication device, comprising:
a first execution unit, configured to execute a first operation, wherein the first operation comprises at least one of the following:
determining that a first data set is failed, or determining that the first data set is successful, or determining that the first data set is not a failed data set;
determining that the first data set is completely sent or incompletely sent;
determining that the first data set is completely received or incompletely received;
incorporating a failure of the first data set into data set failure rate statistics;
skipping incorporating the first data set into the data set failure rate statistics; and
determining that the denominator of a data set failure rate does not comprise the first data set.

24. A communication device, wherein the communication device is a second communication device, comprising:
a second execution unit, configured to execute a second operation, wherein the second operation comprises at least one of the following:
determining a data set failure rate requirement;
determining a first indicator;
determining a second indicator;
determining a fifth indicator; and
sending third information, wherein the third information comprises at least one of the following: the data set failure rate requirement, range information of data sets corresponding to the data set failure rate requirement, the first indicator, the second indicator, and the fifth indicator;
the first indicator is used for indicating at least one of the following: all data packets in a first data set require to be completely processed;
the second indicator is used for indicating at least one of the following: all header data packets in the first data set require to be completely processed, and information about the range of header data packets requires to be completely processed; and
the fifth indicator is used for indicating at least one of the following: tail data in the first data set allows to be lost, and information about the range of tail data packets allows to be lost.

25. A communication device, wherein the communication device is a third communication device, comprising:
a third execution unit, configured to execute a third operation, wherein the third operation comprises at least one of the following:
determining fourth information, wherein the fourth information comprises at least one of the following: a third indicator, first information, a fourth indicator, and second information; and
sending the fourth information,
wherein
the third indicator is used for indicating one of the following: some data packets in a first data set are lost, the first data set is lost entirely, some data packets in the first data set are lost outside a first network, some data packets in the first data set are lost outside a first communication device, the first data set is lost entirely outside the first network, and the first data set is lost entirely outside the first communication device;
the first information comprises at least one of the following: information of data packets in the first data set lost outside the first network, and information of data sets lost outside the first network;
the fourth indicator is used for indicating one of the following: header data in the first data set is lost, header data in the first data set is lost outside the first network, and header data in the first data set is lost outside the first communication device; and
the second information comprises: information of header data packets in the first data set lost outside the first network.

26. A communication device, comprising a processor, a memory, and a computer program stored in the memory and executable on the processor, wherein the computer program, when executed by the processor, implements the steps of the data processing method according to any one of claims 1 to 15, or implements the steps of the data processing method according to any one of claims 16 to 20, or implements the steps of the data processing method according to any one of claims 21 to 22.

27. A readable storage medium, having programs or instructions stored thereon, wherein the programs or instructions, when executed by a processor, implement the data processing method according to any one of claims 1 to 15, or implement the data processing method according to any one of claims 16 to 20, or implement the data processing method according to any one of claims 21 to 22.
